# EUROPÄISCHE PATENTSCHRIFT

(11) **EP 3 195 718 B1**
(45) Veröffentlichungstag und Bekanntmachung des Hinweises auf die Patenterteilung: **24.07.2019**
(21) Anmeldenummer: 17000109.3
(22) Anmeldetag: 23.01.2017
(51) Int. Cl.: A01D 34/73

(54) **SCHNEIDMESSER FÜR EINEN WERKZEUGKOPF EINES FREISCHNEIDERS**
CUTTING BLADE FOR A TOOL HEAD OF A FREE CUTTER
LAME COUPANTE POUR UNE TÊTE D'OUTIL D'UNE DÉBROUSSAILLEUSE

(30) Priorität: 23.01.2016 DE 102016000719; 03.03.2016 DE 102016002607
(43) Veröffentlichungstag der Anmeldung: 26.07.2017
(73) Patentinhaber: Andreas Stihl AG & Co. KG, 71336 Waiblingen (DE)
(72) Erfinder: Günther, David, D-71394 Kernen i. R. (DE); Pöhler, Fabian, D-70736 Fellbach (DE)
(74) Vertreter: Wasmuth, Rolf

(56) Entgegenhaltungen:
- WO-A1-90/14755
- CA-A1- 2 199 430
- DE-A1- 2 811 437

## Beschreibung

Die Erfindung betrifft ein Schneidmesser für einen Werkzeugkopf eines Freischneiders nach dem Oberbegriff des Anspruchs 1.

Derartige Schneidmesser, im Markt auch als Polycutmesser bezeichnet, sind an sich bekannt und weisen ein gutes Schnittverhalten bei hoher Standfestigkeit auf.

An einem Werkzeugkopf sind zum Beispiel über den Umfang drei Schneidmesser mit in Umfangsrichtung gleichen Winkelabständen zueinander angeordnet, wobei die Schneidmesser um eine Verschwenkachse in der Schnittebene des Schneidmessers verschwenkbar sind. Rotiert der Werkzeugkopf, richten sich die Schneidmesser um die Verschwenkachse etwa radial zur Rotationsachse des Werkzeugkopfes aus, wobei eine vorlaufende Messerschneide des Schneidmessers mit dem Schnittgut in Eingriff tritt.

Aus der CA 2,199,430 A1 ist ein Schneidmesser bekannt, das aus einem flachen, länglichen Grundkörper besteht, der eine Längsmittelachse aufweist, die sich von einem ersten Ende zu einem zweiten Ende des Grundkörpers erstreckt. Der Grundkörper weist Längsränder auf, die sich mit einem Abstand zur Längsmittelachse von dem ersten Ende zu dem zweiten Ende des Grundkörpers erstrecken. Der Grundkörper zeigt ferner eine erste, obere Deckfläche und eine zweite, untere Deckfläche, wobei sich eine Deckfläche in einer ersten Richtung quer zur Längsmittelachse zwischen den Längsrändern des Grundkörpers und in einer zweiten Richtung längs der Längsmittelachse von dem ersten Ende bis zu dem zweiten Ende des Grundkörpers erstreckt. An dem ersten Ende des Grundkörpers ist eine Befestigungskontur zur Montage des Schneidmessers am Werkzeugkopf vorgesehen; das zweite Ende des Grundkörpers bildet ein freies Messerende des Schneidmessers. An den Längsrändern des Grundkörpers ist eine Messerschneide ausgebildet.

Der Werkzeugkopf mit den Schneidmessern rotiert mit bis zu 12.000 1/min; im unbelasteten Zustand können die Drehzahlen noch höher liegen. In Abhängigkeit von der Drehzahl wird durch das auf einer Kreisbahn umlaufende Schneidmesser ein Geräusch angeregt, was insbesondere im unbelasteten Zustand des Werkzeugkopfes störend ist.

Aus der WO 90/14755 A1 ist ein Schneidmesser für einen Motorrasenmäher bekannt, der einen flachen, L-förmig gewinkelten Grundkörper aufweist, der auf einer Flachseite sich kreuzende Versteifungsrippen trägt. Die Versteifungsrippen dienen ferner als Wurfelemente, um das geschnittene Gras in einen Grasfangkorb zu fördern.

Die DE 28 11 437 A1 zeigt eine im Wesentlichen rechteckige Messerklinge aus einem Flachmaterial, welches zur Versteifung mit Prägungen versehen ist.

Der Erfindung liegt die Aufgabe zugrunde, ein Schneidmesser für einen Werkzeugkopf eines Freischneiders derart auszubilden, dass die Geräuschanregung des Schneidmessers insbesondere bei hohen Drehzahlen reduziert ist.

Die Aufgabe wird erfindungsgemäß nach den Merkmalen des Anspruchs 1 gelöst. Nach der Erfindung ist in einem Bereich zwischen der im Betrieb aktiven Messerschneide und der Längsmittelachse des Grundkörpers des Schneidmessers auf zumindest einer Deckfläche zumindest ein topografisches Störelement in der Deckfläche vorgesehen, wobei das topografische Störelement das Höhenprofil der Deckfläche gestaltet. Eine Höhenlinie des Höhenprofils verläuft quer zur Längsmittelachse des Grundkörpers in eine Richtung von der Messerschneide des Schneidmessers zur Längsmittelachse des Grundkörpers über das Störelement. Auf der zur Mittelebene des Grundkörpers gegenüberliegenden Deckfläche ist ein gegenüberliegendes Höhenprofil ausgebildet, welches sich von dem Höhenprofil der ersten Deckfläche unterscheidet. Eine Höhenlinie des gegenüberliegenden Höhenprofils verläuft von der Messerschneide in Richtung zur Längsmittelachse, wobei zumindest eine Anzahl von Linienpunkten der Höhenlinie des ersten Höhenprofils den Linienpunkten der gegenüberliegenden Höhenlinie des gegenüberliegenden Höhenprofils auf Normalen zur Mittelebene des Grundkörpers gegenüberliegt. Die Höhenlinie des ersten Höhenprofils auf der zumindest einen Deckfläche und die gegenüberliegende Höhenlinie auf der gegenüberliegenden Deckfläche sind dabei nicht deckungsgleich. Im Bereich von der im Betrieb aktiven Messerschneide bis zur Längsmittelachse des Grundkörpers verläuft die Höhenlinie der ersten Deckfläche bedingt durch das mindestens eine Störelement anders als eine gegenüberliegende Höhenlinie auf der zweiten, gegenüberliegenden Deckfläche. Die Höhenlinie des ersten Höhenprofils auf der zumindest einen Deckfläche des Grundkörpers weist im Bereich des Störelementes einen ansteigenden Linienabschnitt und einen abfallenden Linienabschnitt auf. Zumindest ein zwischen den Linienabschnitten der Höhenlinie liegender Wendepunkt der Steigung bildet dabei einen Teil des Störelementes selbst. Ein Störelement weist mindestens einen steigenden und einen fallenden Linienabschnitt auf. Dabei kann zwischen dem ansteigenden und abfallenden Linienabschnitt ein Zwischenabschnitt ausgebildet sein. Die am Übergang zwischen dem steigenden bzw. dem fallenden Linienabschnitt und dem Zwischenabschnitt liegenden Punkte sind im Sinne der Anmeldung Wendepunkte. Ein Wendepunkt ist sowohl eine Stelle der Höhenlinie, die am Übergang zwischen dem steigenden und dem fallenden Linienabschnitt liegt, als auch eine Stelle, die am Übergang zwischen dem steigenden bzw. dem fallenden Linienabschnitt und dem Zwischenabschnitt liegt. Auch ein mathematisch nicht differenzierbarer Übergang von einem steigenden in einen fallenden Linienabschnitt oder umgekehrt ist im Sinne der Anmeldung ein Wendepunkt.

Ein Störkörper kann im Rahmen der Erfindung nur auf der oberen, nur auf der unteren oder auch auf beiden Deckflächen des Grundkörpers vorgesehen sein. Wesentlich bei der Ausbildung des erfindungsgemäßen Schneidmessers ist eine bezogen auf eine Mittelebene des Grundkörpers konstruktiv ausgebildete Asymmetrie der Querschnittsausbildung.

Durch diese Gestaltung wird erreicht, dass die an den Deckflächen des Schneidmessers entlang strömende Luft im Bereich des topografischen Störelementes in ihrer Strömung gestört ist, so dass sich z. B. auf der oberen Deckfläche mit einem Störelement ein anderes Strömungsverhalten ergibt als auf der gegenüberliegenden unteren Deckfläche des Schneidmessers, die vorzugsweise kein oder auch ein an einer anderen Stelle angeordnetes Störelement aufweist. Das konstruktiv vorgesehene Störelement bewirkt insgesamt am Schneidmesser Strömungsverhältnisse, die die Geräuschemission eines rotierenden Schneidmessers signifikant senken. Das erfindungsgemäße Schneidmesser für einen Werkzeugkopf eines Freischneiders weist auch bei hohen Rotationsgeschwindigkeiten eine nur geringe Geräuschemission auf.

In Weiterbildung der Erfindung weist der Grundkörper eine zwischen der ersten und der zweiten Deckfläche liegende Mittelebene auf. Der zwischen den Linienabschnitten der Höhenlinie liegender Wendepunkt des topografischen Störelementes weist auf einer Normalen zur Mittelebene einen Abstand zur Mittelebene auf. Ein bezogen auf die gleiche Normale zur Mittelebene dem Wendepunkt direkt gegenüberliegender Referenzpunkt der zweiten Deckfläche weist einen Referenzabstand zur Mittelebene auf. Der erste Abstand des Wendepunktes ist ungleich dem Referenzabstand des Referenzpunktes zur Mittelebene.

Zweckmäßig sind der erste Abstand und der Referenzabstand um eine Abstandsdifferenz von bis zu ±100 % unterschiedlich. Ein Absolutwert der Abstandsdifferenz kann in einem Bereich von einem Betrag zwischen 0,2 mm bis 2 mm liegen.

In Weiterbildung der Erfindung ist vorgesehen, dass die Messerschneide durch eine Längskante einer Schneidenfläche gebildet ist und die Schneidenfläche zusammen mit einer Messerrückenfläche die Deckfläche des Grundkörpers bildet. Dabei ist die Anordnung so vorgesehen, dass in Draufsicht auf den Grundkörper die Messerrückenfläche von der Längsmittelachse des Grundkörpers geteilt ist und das topografische Störelement in einem Bereich zwischen der Schneidenfläche und der Längsmittelachse des Grundkörpers liegt.

Zweckmäßig erstreckt sich das Störelement längs der Messerschneide und weist eine Breite auf, die quer zur Messerschneide gemessen ist.

In einer ersten Ausführungsform kann das Störelement als Erhebung ausgebildet sein, die aus der Deckfläche vorsteht. Zweckmäßig kann das Störelement auch als Vertiefung gestaltet sein, die als Senke in der Deckfläche ausgebildet ist. Das Störelement ist vorteilhaft als Längsrippe oder als Längsnut gestaltet.

Die geradlinig sich erstreckende Längsrippe bzw. die geradlinig sich erstreckende Längsnut schließt mit der Längsmittelachse des Grundkörpers einen Winkel im Bereich von 0° bis 10° ein. Der Winkel ist bevorzugt in einem Bereich zwischen 2° und 4° ausgebildet.

Das als Längsnut und/oder Längsrippe ausgebildete topografische Störelement erstreckt sich von dem ersten Ende des Grundkörpers bis zum freien Messerende. Vorzugsweise erstrecken sich Längsnut und/oder Längsrippe ohne Unterbrechung von dem ersten Ende des Grundkörpers zu dessen zweiten Ende.

Das topografische Störelement in Form einer Längsrippe und/oder einer Längsnut läuft zweckmäßig am freien Messerende aus.

In bevorzugter Ausgestaltung ist der Grundkörper des Schneidmessers aus Kunststoff gebildet, insbesondere aus verstärktem Kunststoff wie glasfaserverstärktem Kunststoff.

Weitere Merkmale ergeben sich aus den weiteren Ansprüchen, der Beschreibung und der Zeichnung, in der nachstehend im Einzelnen beschriebene Ausführungsbeispiele der Erfindung dargestellt sind. Es zeigen:
- Fig. 1: in perspektivischer Ansicht einen Werkzeugkopf eines Freischneiders mit montierten Schneidmessern,
- Fig. 2: eine Draufsicht auf ein erfindungsgemäßes Schneidmesser,
- Fig. 3: einen Schnitt längs der Linie III-III in Fig. 2 durch das Schneidmesser,
- Fig. 4: einen Schnitt längs der Linie IV-IV in Fig. 3 durch den Grundkörper des Schneidmessers,
- Fig. 4A: in vergrößerter Darstellung einen schematischen Schnitt durch einen im Betrieb aktiven Messerabschnitt,
- Fig. 5: eine Draufsicht auf ein erfindungsgemäßes Schneidmesser in einer weiteren Ausführungsform,
- Fig. 6: einen Schnitt durch das Schneidmesser längs der Linie VI-VI in Fig. 5,
- Fig. 7: einen Schnitt durch den Grundkörper des Schneidmessers längs der Linie VII-VII in Fig. 6,
- Fig. 8: in Draufsicht ein weiteres Ausführungsbeispiel eines erfindungsgemäßen Schneidmessers,
- Fig. 9: einen Schnitt durch das Schneidmesser längs der Linie IX-IX in Fig. 8,
- Fig. 10: in Draufsicht ein weiteres Ausführungsbeispiel eines erfindungsgemäßen Schneidmessers mit geradlinigen Störelementen unterschiedlicher Orientierung,
- Fig. 11: in Draufsicht ein weiteres Ausführungsbeispiel eines erfindungsgemäßen Schneidmessers mit nur im Endabschnitt des Schneidmessers angeordneten Störelementen,
- Fig. 12: eine vergrößerte Darstellung eines Schnittes durch ein erhabenes Störelement anderer Querschnittsform gemäß Rahmen B in Fig. 7,
- Fig. 13: in vergrößerter Darstellung einen Schnitt durch ein Störelement als Vertiefung in anderer Querschnittsform gemäß Rahmen A in Fig. 4,
- Fig. 14: in vergrößerter Darstellung einen Schnitt durch ein erhabenes Störelement in einer weiteren Querschnittsform gemäß Darstellung in Fig. 12,
- Fig. 15: in vergrößerter Darstellung einen Schnitt durch ein als Vertiefung ausgebildetes Störelement in einer weiteren möglichen Querschnittsform gemäß Darstellung in Fig. 13,
- Fig. 16: in vergrößerter Darstellung einen Schnitt durch ein erhabenes Störelement in einer weiteren Querschnittsform gemäß Darstellung in Fig. 12 mit Ausbildung mehrerer Wendepunkte auf einer über das Störelement verlaufenden Höhenlinie,
- Fig. 17: in vergrößerter Darstellung einen Schnitt durch ein erhabenes Störelement gemäß Darstellung in Fig. 16 in einer weiteren Querschnittsform mit Ausbildung einer ausgeprägten Senke und mehreren Wendepunkten auf einer über das Störelement verlaufenden Höhenlinie,
- Fig. 18: in vergrößerter Darstellung einen Schnitt durch ein Störelement gemäß Darstellung in Fig. 17 mit einer ausgeprägten Erhebung und einer anschließenden, ausgeprägten Vertiefung sowie mehreren Wendepunkten auf einer über das Störelement verlaufenden Höhenlinie,
- Fig. 19: in vergrößerter Darstellung einen Schnitt durch ein Störelement in einer Darstellung gemäß Fig. 15 mit einer in einer Vertiefung angeordneten Erhebung,
- Fig. 20: einen schematischen Querschnitt durch den Grundkörper eines Schneidmessers in einer ersten Arbeitslage,
- Fig. 21: einen schematischen Querschnitt eines Schneidmessers nach Fig. 20 in einer um 180° um die Längsmittelachse gewendeten Arbeitslage,
- Fig. 22: ein weiteres Ausführungsbeispiel eines schematischen Querschnitts durch einen Grundkörpers eines Schneidmessers in einer ersten Arbeitslage entsprechend Fig. 20,
- Fig. 23: einen schematischen Querschnitt eines Schneidmessers nach Fig. 22 in einer um 180° um die Längsmittelachse gewendeten Arbeitslage,
- Fig. 24: einen schematischen Querschnitt durch einen Grundkörper eines Schneidmessers in einer weiteren Ausführungsform,
- Fig. 25: eine Draufsicht auf ein weiteres Ausführungsbeispiel eines erfindungsgemäßen Schneidmessers,
- Fig. 26: einen Schnitt durch das Schneidmesser nach Fig. 25 in einer Darstellung entsprechend Fig. 3.

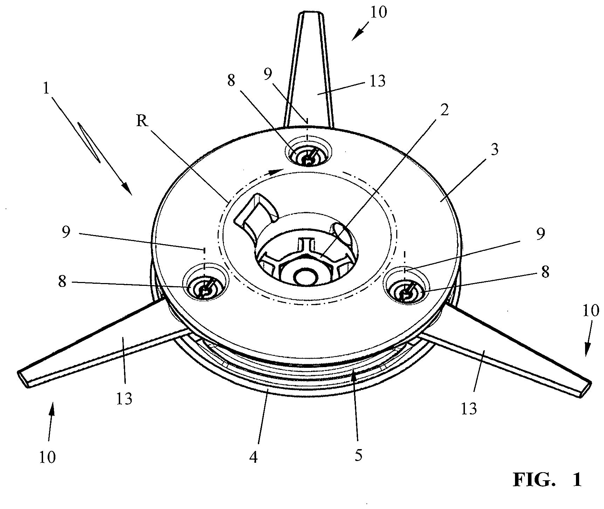

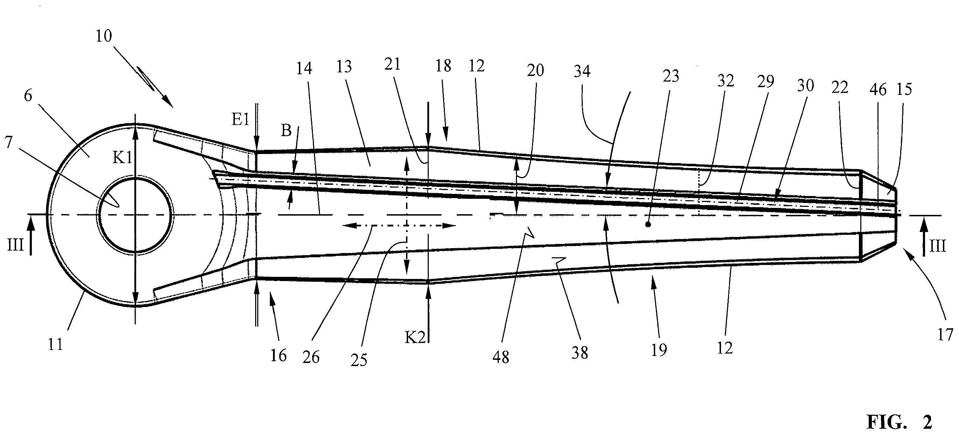

In Fig. 1 ist ein Werkzeugkopf 1 dargestellt, der eine zentrale Aufnahme 2 zur Montage des Werkzeugkopfes an einer rotierenden Antriebswelle eines Freischneiders aufweist. Der Werkzeugkopf 1 besteht aus einer oberen Kopfhälfte 3 und einer unteren Kopfhälfte 4, die drehfest miteinander verbunden sind. Zwischen den Kopfhälften 3 und 4 kann eine umlaufende Nut 5 ausgebildet sein, in welche ein Befestigungsende 6 (Fig. 2) eines Schneidmessers 10 eingesetzt ist. Das Befestigungsende 6 weist im gezeigten Ausführungsbeispiel eine Befestigungskontur11 auf, die ein Durchgangsloch 7 zur Aufnahme eines Befestigungsbolzens 8 aufweist. Der Befestigungsbolzen 8 durchgreift das Durchgangsloch 7 und wird mit einem Gewindeende in die untere Kopfhälfte 4 fest eingeschraubt. Das Schneidmesser 10 ist im Ausführungsbeispiel um den Befestigungsbolzen 8 um eine Schwenkachse 9 verschwenkbar. Andere Montagemöglichkeiten des Schneidmessers 10 an einem Werkzeugkopf 1 können zweckmäßig sein. Die Schwenkachse 9 hat einen radialen Abstand zum Zentrum der Aufnahme 2 des Werkzeugkopfes 1. Je nach der ausgeführten Befestigung des Schneidmessers 10 am Werkzeugkopf 1 kann die Schwenkachse 9 durch das Schneidmesser 10 verlaufen oder auch mit einem Abstand zum Schneidmesser 10 liegen.

Rotiert der Werkzeugkopf 1 in Drehrichtung R, richten sich die Schneidmesser 10 aufgrund der wirkenden Fliehkraft und der Beweglichkeit um die Verschwenkachse 9 etwa radial zur Aufnahme 2 des Werkzeugkopfes 1 aus. Mit einer in Drehrichtung R vorlaufenden Messerschneide 12 des Schneidmessers 10 kann Schnittgut gemäht werden.

Die in Fig. 1 schematisch dargestellten Schneidmesser 10 sind in den nachfolgenden Fig. 2 bis 11 detailliert wiedergegeben.

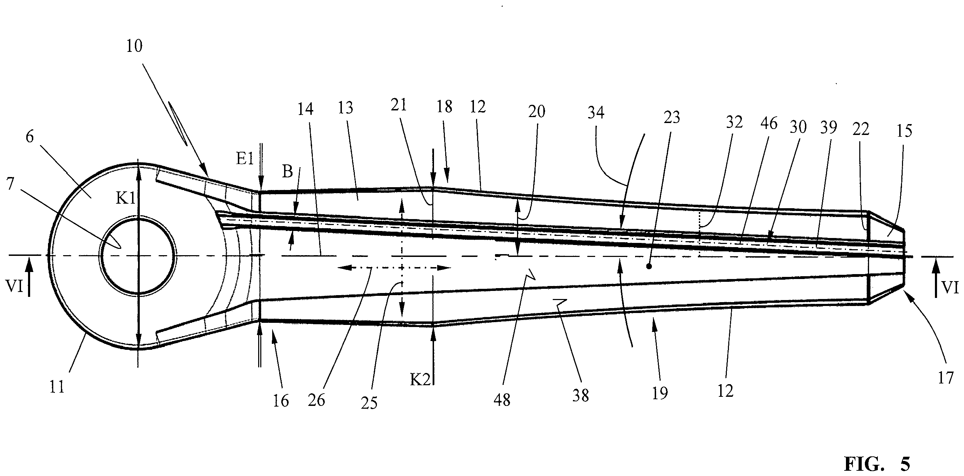

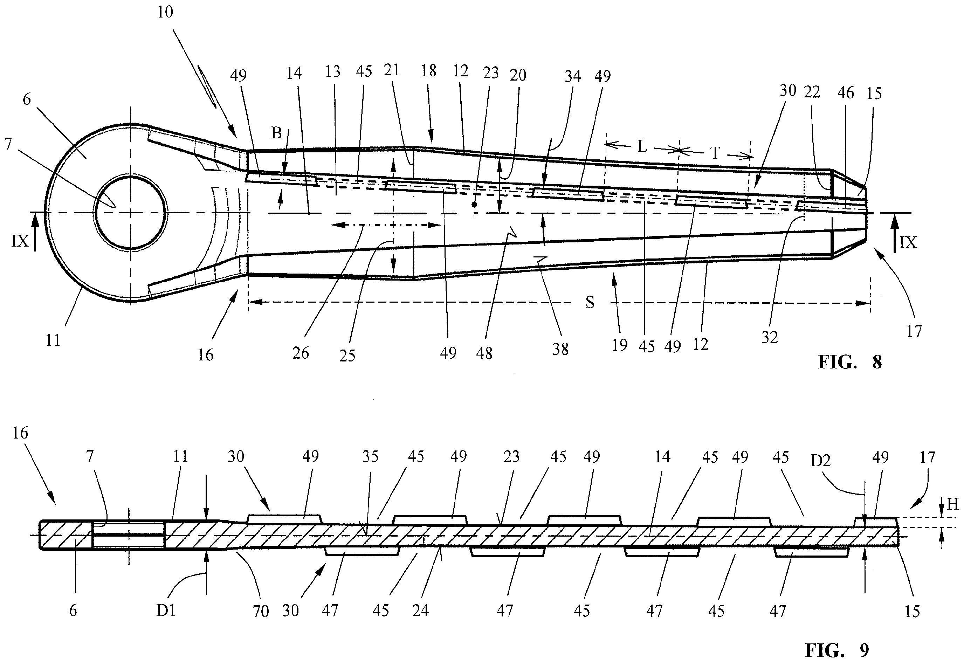

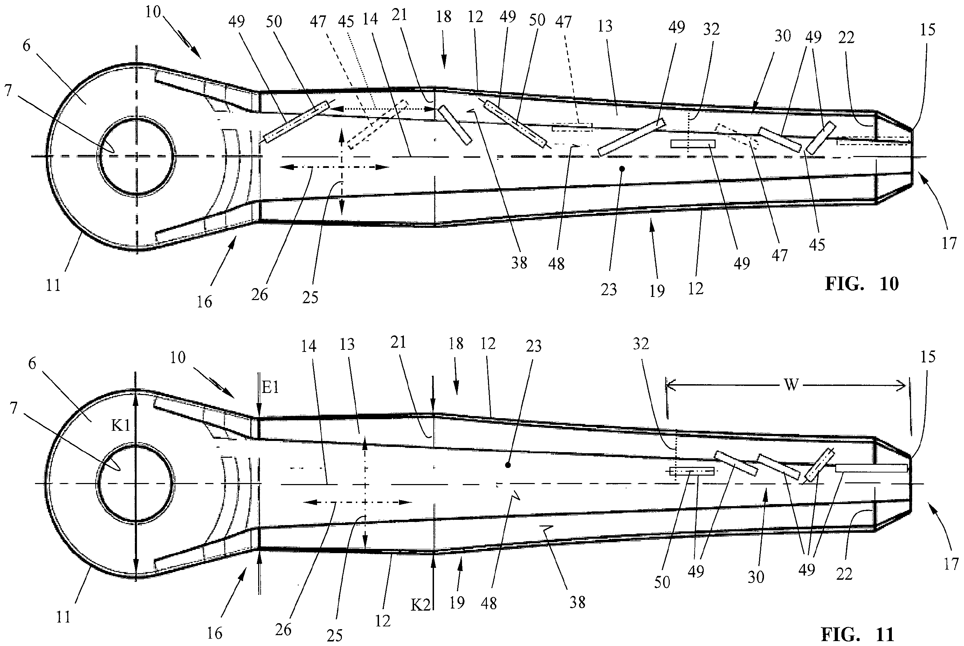

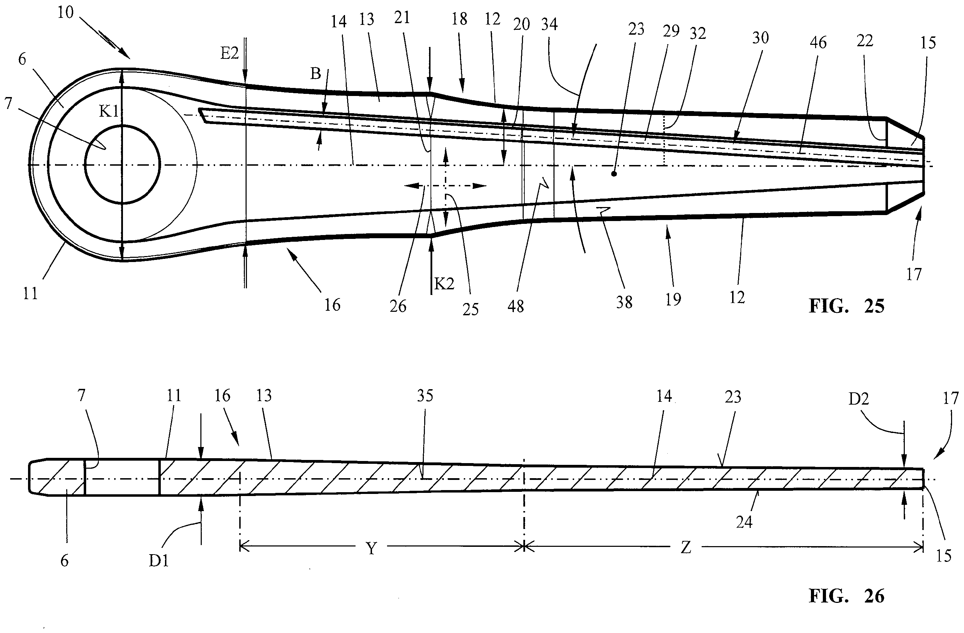

Die Fig. 2 bis 4 zeigen eine erste Ausführungsform, die Fig. 5 bis 7 eine zweite Ausführungsform, die Fig. 8 und 9 eine dritte Ausführungsform und die Figuren 10 und 11 eine vierte und eine fünfte Ausführungsform eines erfindungsgemäßen Schneidmessers und Fig. 25 und 26 eine weitere Ausführungsform eines erfindungsgemäßen Schneidmessers. Der Grundaufbau der Schneidmesser 10 aller Ausführungsformen ist gleich, weshalb für gleiche Teile gleiche Bezugszeichen verwendet sind. Die am Beispiel einer der Ausführungsformen beschriebenen Gestaltungsmerkmale des Schneidmessers und dessen konstruktive Einzelheiten gelten in gleicher Weise auch für andere Ausführungsbeispiele. Die zu einem Ausführungsbeispiel beschriebenen Merkmale sind auch bei einem anderen Ausführungsbeispiel anwendbar oder mit Merkmalen eines weiteren Ausführungsbeispiels zu kombinieren.

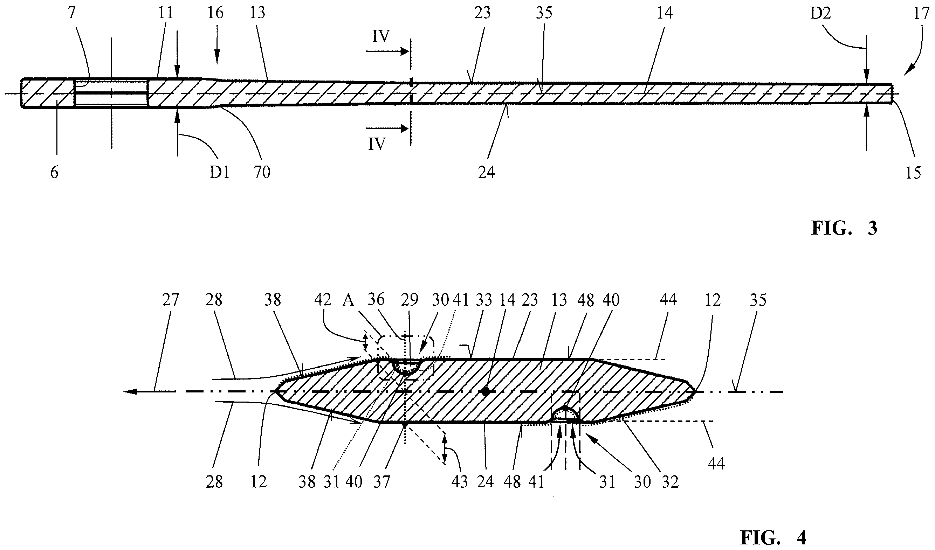

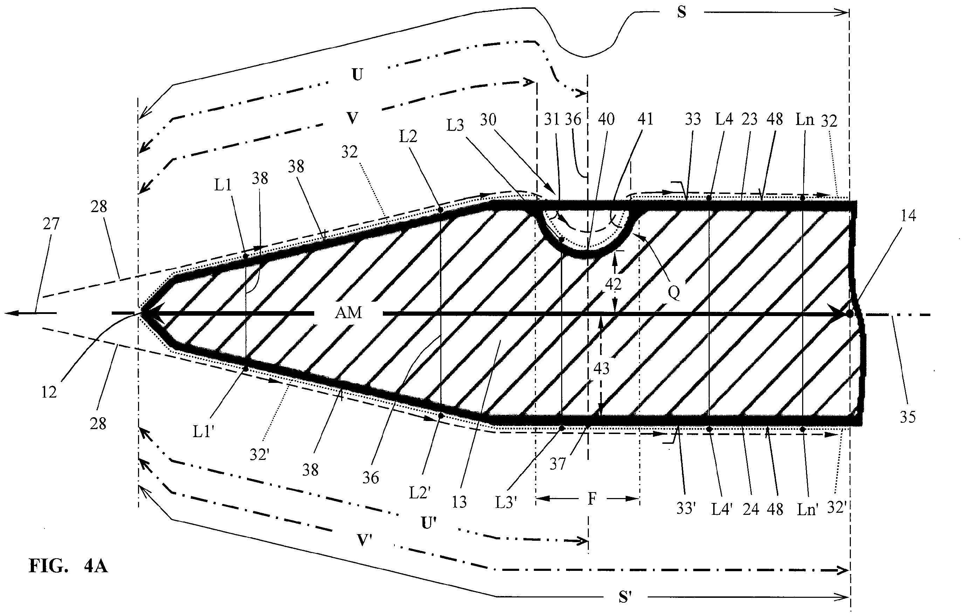

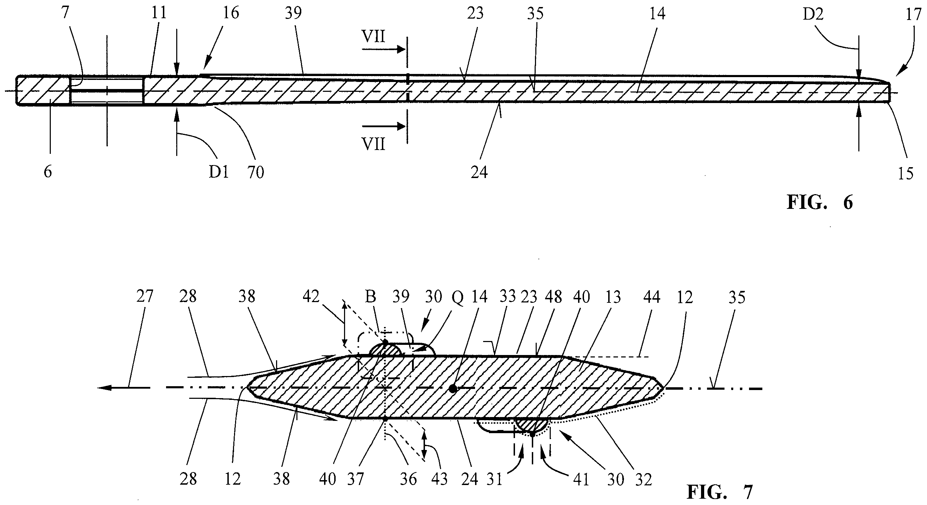

Das Schneidmesser 10 besteht vorzugsweise aus einem flachen, länglichen Grundkörper 13, wie er in den Fig. 2, 5, 8, 10, 11 und 25 in Draufsicht wiedergegeben ist. Der Querschnitt des Grundkörpers 13 ist beispielhaft in den Figuren 4 und 7 wiedergegeben. Abweichend von der gezeigten Querschnittsform können auch tropfenförmige, linsenförmige, rautenförmige oder andere Querschnittsformen vorgesehen sein. Auch Mischformen der genannten Querschnittsformen können zweckmäßig sein. Als länglicher Grundkörper 13 wird ein Grundkörper verstanden, dessen Länge mehrfach größer ist als seine Breite. Als flacher Grundkörper 13 wird ein Grundkörper verstanden, dessen Breite größer, insbesondere mehrfach größer ist als seine Dicke. Der Grundkörper 13 nach dem Ausführungsbeispiel ist vorteilhaft 5- bis 10-mal länger als breit und 25- bis 35-mal länger als dick. Der Grundkörper 13 nach dem Ausführungsbeispiel ist vorteilhaft 5- bis 10-mal breiter als dick.

Der längliche Grundkörper 13 weist eine Längsmittelachse 14 auf, die sich von einem ersten Ende 16 zu einem zweiten Ende 17 des Grundkörpers 13 erstreckt. Der Grundkörper 13 weist ferner Längsränder 18, 19 auf, die sich - mit einem Abstand 20 - quer zur Längsmittelachse 14 erstrecken. Dabei erstrecken sich die Längsränder 18 und 19 von dem ersten Ende 16 des Grundkörpers 13 bis zum zweiten Ende 17 des Grundkörpers 13. Der Abstand 20 kann über die Länge des Grundkörpers 13 variieren. Im gezeigten Ausführungsbeispiel hat der Grundkörper 13 in Draufsicht einen ersten Abschnitt 21 größter Breite sowie einen zweiten Abschnitt 22 geringster Breite. Der erste Abschnitt 21 liegt näher zum ersten Ende 16, also näher an dem Befestigungsende 6 des Schneidmessers 10; der zweite Abschnitt 22 geringster Breite liegt nahe dem zweiten Ende 17 des Grundkörpers 13, welches ein freies Messerende 15 bildet.

Das erste Ende 16, das zweite Ende 17 sowie die vom ersten Ende 16 zum zweiten Ende 17 verlaufenden Längsränder 18 und 19 begrenzen eine erste Deckfläche 23 sowie eine zweite Deckfläche 24. Wie die Fig. 2 und 3 zeigen, kann die erste Deckfläche 23 eine obere Deckfläche 23 des Grundkörpers 13 und die zweite Deckfläche 24 eine untere Deckfläche 23 des Grundkörpers 13 bilden. Jede Deckfläche 23, 24 erstreckt sich in einer ersten Richtung 25 quer zur Längsmittelachse 14 zwischen den Längsrändern 18 und 19 und in einer zweiten Richtung 26 längs der Längsmittelachse 14 von dem ersten Ende 16 bis zum zweiten Ende 17 des Grundkörpers 13.

An mindestens einem der Längsränder 18, 19 ist eine Messerschneide 12 ausgebildet; im gezeigten Ausführungsbeispiel ist an beiden Längsrändern 18 und 19 eine Messerschneide 12 ausgebildet. Ein derartiges Schneidmesser 10 bildet ein Wendemesser, bei welchem entweder die Messerschneide 12 des einen Längsrandes 18 oder die Messerschneide 12 des anderen Längsrandes 19 im Betrieb des Werkzeugkopfes 1 eingesetzt werden kann. Je nach Einbaulage des Schneidmessers 10 und Drehrichtung des Werkzeugkopfes ist die Messerschneide 12 des Längsrandes 18 oder die Messerschneide 12 des Längsrandes 19 wirksam. Im Folgenden wird die in Drehrichtung R vorne liegende Messerschneide 12, die mit einem Schnittgut in Eingriff tritt, auch als aktive Messerschneide 12 bezeichnet.

Wie sich insbesondere aus den Figuren 4 und 7 ergibt, ist in einem Bereich zwischen einer Messerschneide 12 und der Längsmittelachse 14 des Grundkörpers 13 zumindest ein topografisches Störelement 30 vorgesehen. Aus der Zusammenschau der Fig. 2 und 4 bzw. 5 und 7 wird deutlich, dass durch das topografische Störelement 30 das Höhenprofil 33 der Deckfläche 23 bzw. 24 des Grundkörpers 13 bestimmt ist. Ein derartiges Störelement 30 kann integral mit dem Grundkörper 13 ausgebildet sein oder additiv am Grundkörper 13 angeordnet sein.

In Fig. 4 und 4A ist oben links und unten rechts punktiert eine Höhenlinie 32 des Höhenprofils 33 sowie eine Höhenlinie 32' des Höhenprofils 33' wiedergegeben. Die Höhenlinie 32 verläuft quer zur Längsmittelachse 14 des Grundkörpers 13 von der Messerschneide 12 zur Längsmittelachse 14 über das Störelement 30 (Fig. 2). Diese Höhenlinie 32 weist im Bereich des Störelementes 30 einen abfallenden Linienabschnitt 31 und einen in diesem Ausführungsbeispiel direkt daran anschließenden, ansteigenden Linienabschnitt 41 auf. Der abfallende Linienabschnitt 31 geht über einen Wendepunkt 40 in den ansteigenden Linienabschnitt 41 über. Dieser zwischen den Linienabschnitten 31 und 41 der Höhenlinie 32 liegende Punkt ist Teil des Störelementes 30 und wird im Sinne der Erfindung als Wendepunkt 40 bezeichnet. Der Wendepunkt 40 zeichnet sich dadurch aus, dass die Steigung der Höhenlinie 32 im Wendepunkt 40 'Null' ist.

Als abfallender Linienabschnitt 31 wird der Linienabschnitt im Bereich des Störelementes 30 verstanden, der in einer Richtung von der Messerschneide 12 zur Längsmittelachse 14 verläuft und bei dieser Verlaufsrichtung zu einer Mittelebene 35 des Grundkörpers 13 abfällt. Die aufeinanderfolgenden Punkte des Linienabschnitts 31 haben einen kleiner werdenden Punktabstand zur Mittelebene.

Als ansteigender Linienabschnitt 41 wird ein Linienabschnitt im Bereich des Störelementes 30 verstanden, der in einer Richtung von der Messerschneide 12 zur Längsmittelachse 14 verläuft und bei dieser Verlaufsrichtung bezogen auf die Mittelebene 35 des Grundkörpers 13 ansteigt. Die aufeinanderfolgenden Punkte des Linienabschnitts 41 haben einen größer werdenden Punktabstand zur Mittelebene.

Bezogen auf die in Pfeilrichtung 28 anströmende Luft ist der erste Linienabschnitt 31 der abfallende Linienabschnitt. Der zweite Linienabschnitt 41 ist der ansteigende Linienabschnitt. Die Höhenlinie weist zwischen den Linienabschnitten 31, 41 zumindest einen Wendepunkt 40 auf, der zugleich ein Tiefpunkt ist; im Ausführungsbeispiel nach Fig. 4 geht im Wendepunkt 40 der erste Linienabschnitt 31 unmittelbar und ohne Abstand in den zweiten Linienabschnitt 41 über. Es ist ein einziger Wendepunkt ausgebildet.

Im Ausführungsbeispiel nach Fig. 7 ist bezogen auf die in Pfeilrichtung 28 anströmende Luft der erste Linienabschnitt 41 der ansteigende Linienabschnitt. Der zweite Linienabschnitt 31 ist in diesem Ausführungsbeispiel der abfallende Linienabschnitt. Zwischen den Linienabschnitten 31, 41 liegt zumindest ein Wendepunkt 40, der zugleich ein Hochpunkt ist; im Ausführungsbeispiel nach Fig. 4 und 4A geht im Wendepunkt 40 der erste Linienabschnitt 41 unmittelbar in den zweiten Linienabschnitt 31 über. Es ist ein einziger Wendepunkt ausgebildet.

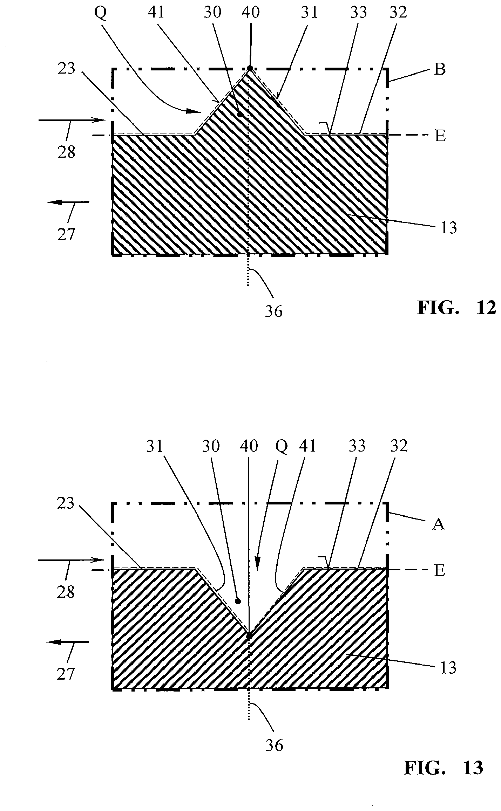

Wie anhand der weiteren Querschnittsbilder der Fig. 12 bis 19 wiedergegeben und nachfolgend noch im Einzelnen beschrieben, ist auch die Ausbildung mehrerer Wendepunkte 40, 40', 40" möglich.

Wird das Profil des Schneidmessers 10 gemäß Fig. 4 und 4A in Pfeilrichtung 27 auf einer Kreisbahn bewegt, wird die anströmende Luft den Pfeilen 28 entsprechend das gezeigte Profil des Schneidmessers 10 umströmen. Dabei ist der Strömungsweg der über die erste - im Ausführungsbeispiel obere - Deckfläche 23 des Grundkörpers 13 strömenden Luft durch das topografische Störelement 30 gestört, während die über die zweite - im Ausführungsbeispiel untere - Deckfläche 24 des Grundkörpers 13 strömende Luft in dem auf einer Normalen gegenüberliegenden Bereich der Deckfläche weitgehend störungsfrei strömen kann. Die Ablösung von Luftwirbeln wird an der ersten Deckfläche 23 konstruktiv durch die Lage und Anordnung des Störelementes 30 in einem Bereich zwischen einer aktiven Messerschneide 12 und der Längsmittelachse 14 erzwungen, während die Luft über die zweite Deckfläche 24 störungsfrei, insbesondere über den gesamten Bereich zwischen der aktiven Messerschneide 12 und der Längsmittelachse 14, strömen kann. Eine Ablösung von Luftwirbeln erfolgt an der zweiten - unteren - Deckfläche 24 zu einem späteren Zeitpunkt als an der ersten - oberen - Deckfläche 23 (oder umgekehrt), insbesondere nach Passieren der Längsmittelachse 14. Durch diese konstruktive Gestaltung hat das bewegte Schneidmesser 10 eine geringe Geräuschanregung und ist im Betrieb signifikant leiser als vergleichbare Schneidmesser 10 ohne topografisches Störelement 30.

Das Störelement 30 bewirkt gemäß den Figuren 4 und 7 eine konstruktiv unsymmetrische Querschnittsform des Grundkörpers 13 zwischen aktiver Schneide 12 und Längsmittelachse 14. Der vordere Teilabschnitt AM (Fig. 4 und 4A) des Schneidmessers 12, der sich von der aktiven Messerschneide 12 bis zur Längsmittelachse 14 erstreckt, weist an der oberen und der unteren Deckfläche 23, 24 ein unterschiedliches Höhenprofil 33, 33' auf. Die Höhenlinie 32 des Höhenprofils 33 der ersten, oberen Deckfläche 23 weist zwischen aktiver Messerschneide 12 und Längsmittelachse 14 einen anderen Verlauf auf als die Höhenlinie 32' des Höhenprofils 33' der unteren, zweiten Deckfläche 24. Einem in der einen Deckfläche 23 angeordneten Störelement 30 liegt auf gleicher Höhe in der anderen Deckfläche 24 kein weiteres Störelement gegenüber, was insbesondere am Querschnitt nach Fig. 4, 4A und 7 zu erkennen ist. Dem Störelement 30 der ersten Deckfläche 23 liegt auf einer durch das Störelement 30 verlaufenden Normalen 36 auf die Mittelebene 35 des Grundkörpers 13 kein Störelement auf der zweiten Deckfläche 24 gegenüber. Der Referenzpunkt 37 liegt in der Ebene 44 der Messerrückenfläche 48 und bildet kein Störelement für die in Pfeilrichtung 28 überströmende Luft. Der dem Störelement 30 der ersten Deckfläche 23 gegenüberliegende Bereich F (Fig. 4A) der zweiten Deckfläche 24 ist frei von Störelementen.

Grundsätzlich kann einem in der einen Deckfläche 23 angeordneten Störelement 30 auf gleicher Höhe in der anderen Deckfläche 24 ein Störelement anderer Größe oder Querschnittsform oder überhaupt kein Störelement gegenüberliegen.

Die Geräuschabsenkung wird insbesondere durch die asymmetrische Querschnittsform (Fig. 4A) der aktiven Messerhälfte AM erzielt. Eine Höhenlinie 32 des ersten Höhenprofils 33 auf der einen - oberen - Deckfläche 23 verläuft quer zur Längsmittelachse 14 des Grundkörpers 13 von der Messerschneide 12 in Richtung zur Längsmittelachse 14 über das auf der - oberen - Deckfläche 23 angeordnete Störelement 30. Auf der zur Mittelebene 35 gegenüberliegenden Deckfläche 24 ist ein gegenüberliegendes Höhenprofil 32' ausgebildet, wobei eine Höhenlinie 32' des gegenüberliegenden Höhenprofils 33' von der Messerschneide 12 in Richtung zur Längsmittelachse 14 verläuft. Die Linienpunkte L1, L2, L3, L4, Ln der Höhenlinie 32 des ersten Höhenprofils 33 liegen den Linienpunkten L1', L2', L3', L4', Ln' der gegenüberliegenden Höhenlinie 32' auf Normalen 36 zur Mittelebene 35 des Grundkörpers 13 gegenüber. Die Ausbildung ist so getroffen, dass die Höhenlinie 32 des ersten Höhenprofils 33 auf der zumindest einen - oberen - Deckfläche 23 und die gegenüberliegende Höhenlinie 32' auf der gegenüberliegenden Deckfläche 24 nicht deckungsgleich sind. Die Höhenlinien 32, 32' lassen sich weder durch Verschiebung, Spiegelung, Drehung oder dgl. deckungsgleich aufeinanderlegen.

Vorteilhaft liegt zwischen der aktiven Messerschneide 12 und der Längsmittelachse 14 ein einziges Störelement 30 entweder auf der ersten, oberen Deckfläche 23 oder der zweiten, unteren Deckfläche 24. Es kann auch zweckmäßig sein, neben dem Störelement 30 ein weiteres Störelement auf einer Deckfläche 23, 24 anzuordnen. Ein derartiges Störelement liegt zweckmäßig in Breitenrichtung des Schneidmessers 10 mit Abstand zu dem ersten Störelement 30. Der Abstand des weiteren Störelementes von dem ersten Störelement 30 entspricht mindestens der Breite des ersten Störelementes 30; vorteilhaft entspricht der Abstand der mehrfachen Breite des Störelementes 30. Die Strömungen an Ober- und Unterseite des Schneidmessers 10 werden sich unterschiedlich ausbilden, wodurch eine Lärmabsenkung erzielt werden kann.

Das topografische Störelement 30 kann - wie im Ausführungsbeispiel nach den Fig. 2 bis 4 und 4A gezeigt - als Vertiefung ausgebildet sein, die eine Senke in der Deckfläche 23 bzw. 24 bildet. Die Senke in der Deckfläche 23 bzw. 24 kann auch nur örtlich begrenzt ausgebildet sein.

In der Ausführungsform nach den Fig. 5 bis 7 ist das topografische Störelement 30 eine Erhebung, die - vgl. die Fig. 6 und 7 - aus der Deckfläche 23 bzw. 24 vorsteht. Die Erhebung in der Deckfläche 23 bzw. 24 kann auch nur örtlich begrenzt ausgebildet sein.

Im Ausführungsbeispiel nach den Fig. 2 bis 4 und Fig. 4A ist das topografische Störelement 30 als Längsnut 29 ausgebildet; im Ausführungseispiel nach den Fig. 5 bis 7 ist das topografische Störelement 30 als Längsrippe 39 gestaltet. Das Störelement 30 kann auch aus einer Kombination von Erhebungen und Vertiefungen ausgebildet sein.

Das topografische Störelement 30 kann derart ausgebildet sein, dass es sich, zumindest über eine Teillänge, längs der Messerschneide 12 erstreckt. Zweckmäßig hat das topografische Störelement 30 eine Breite B, die quer zur Messerschneide 12 gemessen ist. Die Breite B des Störelements 30 ist vorteilhaft kleiner als ein Viertel, insbesondere ein Sechstel der Breite des Schneidmessers 10. Die Ausdehnung des Störelementes 30 in Breitenrichtung ist vorteilhaft kleiner oder gleich der 3-fachen, insbesondere der 2-fachen Ausdehnung des Störelementes 30 in Höhenrichtung.

Das als Längsnut 29 oder Längsrippe 39 ausgebildete topografische Störelement 30 ist im Ausführungsbeispiel bevorzugt geradlinig gestaltet und verläuft vorzugsweise längs einer Linie 46. Die Linie 46 kann mit der Längsmittelachse 40 einen Winkel 34 einschließen, der eine Größe in einem Bereich von 0° bis 10° aufweist. Vorzugsweise hat der Winkel 34 eine Größe zwischen 2° und 4°.

Die Linie 46 ist in den Ausführungsbeispielen als gerade Linie 46 dargestellt. Es kann vorteilhaft sein, die Störelemente 30 längs einer wellenförmigen, gebogenen, gezackten oder unterbrochenen Linie anzuordnen und/oder auszurichten.

In den Ausführungsbeispielen nach den Fig. 2 bis 7 ist das topografische Störelement 30, zweckmäßig als Längsnut 29 oder als Längsrippe 39 ausgebildet und erstreckt sich vorteilhaft von dem ersten Ende 16 des Grundkörpers 13 bis zum zweiten Ende 17 des Grundkörpers 13, welches das freie Messerende 15 bildet. Das topografische Störelement 30, im Ausführungsbeispiel die Längsnut 29 oder die Längsrippe 39, erstreckt sich dabei zweckmäßig ohne Unterbrechung von dem ersten Ende 16, welches das Befestigungsende 6 des Schneidmessers 10 bildet, bis zum freien Messerende 15, welches das zweite Ende 17 bildet. In besonderer Ausgestaltung läuft das topografische Störelement 30 am freien Messerende 15 aus. In der Darstellung nach Fig. 2 läuft die Längsnut 29 am Messerende 15 aus; in der Darstellung nach Fig. 5 bzw. 6 läuft die Längsrippe 39 an dem freien Messerende 15 aus.

Wie die Fig. 4 und 4A, und 7 zeigen, weist der Querschnitt des Grundkörpers 13 eine zwischen der ersten Deckfläche 23 und der zweiten Deckfläche 24 liegende Mittelebene 35 auf. Ausweislich der Fig. 4 und 4A und 7 liegt ein zwischen den Linienabschnitten 31 und 41 der Höhenlinie 32 liegender Wendepunkt 40 des topografischen Störelementes 30 auf einer Normalen 36 zur Mittelebene 35 mit einem ersten Abstand 42 zur Mittelebene 35. Im Ausführungsbeispiel nach Fig. 4 und 4A liegt der Wendepunkt 40 unterhalb der Ebene 44 der Messerrückenfläche 48. Der Wendepunkt 40 liegt zwischen der Ebene 44 der Messerrückenfläche 48 und der Mittelebene 35. Im Ausführungsbeispiel nach Fig. 7 liegt ein Wendepunkt 40 mit einem Abstand oberhalb der Ebene 44 der Messerrückenfläche 48. Der Wendepunkt 40 liegt außerhalb des durch die Ebene 44 der Messerrückenfläche 48 und der Mittelebene 35 begrenzten Raumbereichs.

Bezogen auf eine gleiche Normale 36 zur Mittelebene 35 liegt dem Wendepunkt 40 der einen Deckfläche, z. B. der ersten Deckfläche 23, ein Referenzpunkt 37 der anderen Deckfläche, z. B. der zweiten Deckfläche 24 direkt gegenüber. Der auf der zweiten Deckfläche 24 liegende Referenzpunkt 42 hat zur Mittelebene 35 einen Referenzabstand 43.

In allen Ausführungsbeispielen ist der erste Abstand 42 des Wendepunktes 40 zur Mittelebene 35 ungleich dem Referenzabstand 43 des dem Wendepunkt 40 direkt gegenüberliegenden Referenzpunktes 37. Der erste Abstand 42 und der Referenzabstand 43 können sich um eine Abstandsdifferenz von bis zu ±100 % des Referenzabstandes 43 unterscheiden. Der Absolutwert einer Abstandsdifferenz kann in einem Bereich von einem Betrag zwischen 0,2 mm bis 2 mm liegen.

Wie vorstehend ausgeführt, ist die Messerschneide 12 an einem Längsrand 18 bzw. 19 ausgebildet. Eine Schneidenfläche 38 bildet zusammen mit der Messerrückenfläche 48 die Deckfläche 23 bzw. 24 des Grundkörpers 13. Die Messerrückenfläche 48 ist durch die Längsmittlachse 14 des Grundkörpers 13 in Draufsicht geteilt (Fig. 2), wobei das topografische Störelement 30 vorteilhaft in einem Bereich zwischen der Schneidenfläche 38 und der Längsmittelachse 14 des Grundkörpers 13 liegt. Das Störelement 30 ist somit in der Messerrückenfläche 48 ausgebildet. Eine Ausbildung in der Schneidenfläche 38 kann zweckmäßig sein.

Die Messerrückenfläche 48 ist zumindest in einem Teilbereich vorzugsweise als flache Ebene 44 ausgebildet, wie die Fig. 4 und 4A und 7 zeigen. Die Messerrückenfläche 48 kann zweckmäßig auch zur Mittelebene 35 geneigt sein, z. B. wenn der Grundkörper 13 einen rautenförmigen Querschnitt hat. Im Ausführungsbeispiel der Fig. 2 bis 7 verläuft das Störelement 30 geradlinig zwischen den Enden 16 und 17 des Grundkörpers 13. Es kann vorteilhaft sein, dass das Störelement 30 längs einer gekrümmten Linie zwischen dem ersten Ende 16 und dem zweiten Ende 17 des Grundkörpers 13 verläuft.

Im Ausführungsbeispiel nach den Fig. 8 und 9 ist die Erstreckung des Störelementes 30 zwischen dem ersten Ende 16 und dem zweiten Ende 17 durch Lücken 45 unterbrochen. Im Ausführungsbeispiel der Fig. 8 und 9 ist das Störelement 30 als Erhebung gestaltet; das Störelement erhebt sich topografisch aus dem Grundkörper 13 über eine Höhe H, die 0,2 mm bis 2 mm betragen kann.

Wie Fig. 8 in Draufsicht zeigt, weist der Grundkörper Teilrippen 49 als topografische Störelemente 30 auf; zwischen Teilrippen 49 sind Lücken 45 ausgebildet. Die Teilrippen 49 erstrecken sich - in Draufsicht auf den Grundkörper 13 gesehen - längs einer Linie 46, wobei die Länge T einer Teilrippe 49 vorteilhaft der Länge L einer Lücke 45 entspricht.

Wie aus dem Längsschnitt nach Fig. 9 ersichtlich, sind auf der zweiten Deckfläche 24 vorzugsweise ebenfalls Teilrippen 47 angeordnet, zwischen denen Lücken 45 ausgebildet sind. Die Teilrippen 47 sind - in Draufsicht auf den Grundkörper 13 gesehen - längs einer Linie 46 ausgerichtet.

Zweckmäßig liegen die Teilrippen 49 der Deckfläche 23 - jeweils bezogen auf eine Normale 36 auf die Mittelebene 35 - gegenüber den Lücken 45 zwischen den Teilrippen 47; die Teilrippen 47 der Deckfläche 24 liegen in Schnittansicht nach Fig. 9 in den Lücken 45 zwischen den Teilrippen 49 der Deckfläche 23. Vorteilhaft erstrecken sich über die gesamte aktive Länge S des Schneidmessers 10 topografische Störelemente 30, wobei - wie die Schnittansicht Fig. 9 zeigt - die Störelemente 30 der Deckfläche 23 zu den Störelementen 30 der Deckfläche 24 versetzt liegen.

Der Grundkörper 13 des Schneidmessers 10 besteht vorzugsweise aus Kunststoff, insbesondere aus verstärktem Kunststoff wie glasfaserverstärktem Kunststoff. Die Form des Grundkörpers 13 kann dabei so gestaltet sein, dass die Befestigungskontur 11 am ersten Ende 16 eine erste Dicke D1 aufweist. Das freie Messerende 15 am zweiten Ende 17 des Grundkörpers 13 hat eine zweite Dicke D2. Die zweite Dicke D2 ist kleiner als die erste Dicke D1. Am Übergang von Befestigungsabschnitt 11 zum Grundkörper 13 ist vorteilhaft eine Stufe 70 (Fig. 3, 9) zur Verringerung der Dicke D1 vorgesehen. Die Stufe 70 kann zweckmäßig gerundet sein. Zwischen dem Befestigungsabschnitt 11 und dem ersten Ende 16 des Grundkörpers 13 ist in Draufsicht auf den Grundkörper 13 gemäß Fig. 2, 5 oder 11 eine Einschnürung mit einer Breite E1 ausgebildet. Der Befestigungsabschnitt 11 hat eine erste Breite K1 und der Grundkörper 13 eine zweite Breite K2. Die Breite K2 ist eine maximale Breite des Grundkörpers 13. Die zweite Breite K2 ist kleiner als die erste Breite K1 des Befestigungsabschnittes 11. In den gezeigten Ausführungsbeispielen nach den Fig. 2, 5 oder 11 hat die Einschnürung eine Breite E1, die kleiner als die erste Breite K1 des Befestigungsabschnitts 11 und kleiner als die zweite Breite K2 des Grundkörpers 13 ist.

Im Ausführungsbeispiel nach Fig. 10 weist der Grundkörper 13 zwischen seinem ersten Ende 16 und seinem zweiten Ende 17 topografische Störelemente 30 auf, die einer aktiven Messerschneide 12 des Längsrandes 18 zugeordnet sind und in einem Bereich zwischen der Messerschneide 12 und der Längsmittelachse 14 des Grundkörpers 13 liegen. Die Störelemente 30 sind im Ausführungsbeispiel nach Fig. 10 als Teilrippen 49 ausgebildet, wobei die Teilrippen 49 mit ihren Längsachsen 50 in unterschiedlicher Orientierung zur Längsmittelachse 14 liegen können. Jede Teilrippe 49, unabhängig von ihrer Orientierung zur Längsmittelachse 14 bzw. zur Messerschneide 12, bildet ein Störelement 30, das zu einem frühen Ablösen der Luftströmung vom Schneidmesser führt. Diese frühe Ablösung der Luftströmung bzw. diese frühe Störung der Luftströmung führt zu einem ungleichmäßig umströmten Schneidmesser, welches eine geringere Geräuschemission aufweist als gleichmäßig umströmte Schneidmesser.

Die Teilrippen 49 können parallel zur Längsmittelachse 14 ausgerichtet liegen, rechtwinklig zur Längsmittelachse 14 liegen oder in jedem beliebigen Winkel. Wie die Draufsicht der Fig. 10 zeigt, kann sich eine Teilrippe 49 aus der Messerrückenfläche 48 bis in die Schneidenfläche 38 erstrecken. Die Störelemente im Ausführungsbeispiel nach Fig. 10 liegen zwischen der Längsmittelachse 14 des Grundkörpers 13 und der aktiven Messerschneide 12 des Längsrandes 18. Diese Anordnung der Störelemente 30 ist auch für alle anderen Ausführungsbeispiele zweckmäßig.

Im Ausführungsbeispiel nach Fig. 11 sind wiederum Störelemente 30 gezeigt, die vorzugsweise als Teilrippen 49 ausgebildet sind. Die Teilrippen 49 können im Ausführungsbeispiel nach Fig. 11 - entsprechend der Darstellung in Fig. 10 - ungeordnet vorgesehen sein und sowohl parallel zur Längsmittelachse 14 liegen als auch rechtwinklig. Jede andere Winkellage der Längsachse 50 einer Teilrippe 49 kann zweckmäßig sein.

Im Ausführungsbeispiel nach Fig. 11 ist die Anordnung der Störelemente 30 auf einen Teilabschnitt des Grundkörpers 13 von einer Länge W beschränkt. Dies kann zweckmäßig sein, da die Strömungsgeschwindigkeit der Luft aufgrund der höheren Bahngeschwindigkeit des Endabschnittes des Grundkörpers 13 erhöht ist. Um ein Schneidmesser mit geringer Geräuschemission zu gestalten, kann es daher ausreichend sein, einen Endabschnitt des Schneidmessers mit Störelementen 30 zu versehen.

Der Endabschnitt mit der Länge W in Fig. 11 entspricht etwa einem Drittel der aktiven Länge S (Fig. 8) des Grundkörpers 13.

Zwischen den Teilrippen 49 können Lücken 45 vorgesehen sein, wie schon zum Ausführungsbeispiel nach den Figuren 8 und 9 ausgeführt. Während im Ausführungsbeispiel nach den Figuren 8 und 9 den Lücken 45 zwischen Teilrippen 49 der Deckfläche 23 Teilrippen 47 auf der anderen, gegenüberliegenden Deckfläche 24 zugeordnet sind, ist im Ausführungsbeispiel nach Fig. 10 eine zwischen Teilrippen 49 vorhandene Lücke 45 auf der Deckfläche 23 durch eine Teilrippe 47 auf der gegenüberliegenden Deckfläche 24 nicht vollständig geschlossen.

Vorteilhaft weisen mindestens 30%, vorzugsweise 50% der aktiven Länge S auf der angeströmten Messerschneide 12 ein Störelement 30 an der oberen Deckfläche 23 oder der unteren Deckfläche 24 auf. Die Strömung in den Bereichen ohne Störelemente 30 kann durch benachbarte Störelemente derart beeinflusst sein, dass die erfindungsgemäße Wirkung einer Geräuschreduktion weiterhin gegeben ist.

Die Figuren 12 bis 19 geben neben den in den bisherigen Figuren exemplarisch gezeigten Störelementen anders geformte und stilisiert dargestellte Querschnitte Q des erfindungsgemäßen Störelementes 30 wieder. Diese Darstellungen sind Beispiele vieler möglicher Ausführungsformen, denen gemeinsam ist, dass die in Pfeilrichtung 28 anströmende Luft längs einer Deckfläche 23 des Grundkörpers 13 durch ein Störelement 30 beeinflusst wird. Die Querschnitte Q können in allen beschriebenen Ausführungsbeispielen ausgeführt sein oder auch untereinander kombiniert werden. Alle Querschnitte sind stilisiert dargestellt, eckige Übergänge können alternativ auch gerundet sein.

Ein Störelement 30 besitzt mindestens einen ansteigenden Linienabschnitt 41 und einen abfallenden Linienabschnitt 31. Die in den Figuren 4, 4A und 7 gezeigten Querschnitte Q gehen von dem ansteigenden Linienabschnitt direkt, d. h. ohne einen dazwischenliegenden weiteren Bereich - einem sogenannten Zwischenabschnitt - in den fallenden Linienabschnitt 31 über. Der Übergang erfolgt in den Ausführungsbeispielen entsprechend den Fig. 4, 4A und 7 unmittelbar über einen einzigen Wendepunkt 40. Der gezeigte Wendepunkt 40 entspricht in diesen Ausführungsbeispielen einem mathematischen Wendepunkt.

Der in Figur 12 und 13 gezeigte Querschnitt Q besitzt an dem Übergang des ansteigenden Linienabschnitts 41 zu dem abfallenden Linienabschnitt 31 mathematisch keine Ableitung, der Punkt zwischen dem ansteigenden und abfallenden Linienabschnitt 31, 41 ist nach dem Grundgedanken der Anmeldung dennoch ein Wendepunkt 40, da die Steigung rechts und links des Wendepunktes unterschiedliche Vorzeichen hat.

Im Ausführungsbeispiel nach Fig. 12 ist der Querschnitt Q des Störelementes 30 dreieckförmig ausgebildet. Ein Dreieck, wie dargestellt, ist vorteilhaft.

Die in Pfeilrichtung 28 anströmende Luft trifft auf das Störelement 30 und wird längs des ansteigenden Linienabschnittes 41 der Höhenlinie 32 abgelenkt. Nach Erreichen eines Maximums im Wendepunkt 40 schließt an den ansteigenden Linienabschnitt 41 ein abfallender Linienabschnitt 31 an. Der abfallende Linienabschnitt 31 endet auf einer Ebene E, in gleicher Höhe wie der ansteigende Linienabschnitt 41. Das Höhenprofil 33 der Deckfläche ist somit durch das als Erhebung ausgebildete Störelement 30 gestaltet. Der Wendepunkt 40 liegt auf einer Normalen 36, dem ein Referenzpunkt 37 (Figuren 4, 7) auf der gegenüberliegenden Deckfläche 24 zugeordnet ist.

Im Ausführungsbeispiel nach Fig. 13 ist die Deckfläche 23 durch einen Störkörper 30 gestaltet, der als Senke bzw. Vertiefung in dem Grundkörper 13 ausgebildet ist. Die in Pfeilrichtung 28 anströmende Luft wird somit zunächst längs des abfallenden Linienabschnitts 31 absinken und - nach Überstreichen eines Wendepunktes 40 - längs des ansteigenden Linienabschnitts 41 in Richtung zur Ebene E zurückströmen. Die Höhenlinie 32 des Höhenprofils 33 weist somit eine Senke auf, deren tiefster Punkt den Wendepunkt 30 bildet. Der Wendepunkt 40 liegt auf einer Normalen 36, deren Schnittpunkt mit der nicht dargestellten gegenüberliegenden Deckfläche einen Referenzpunkt 37 (Figuren 4, 7) bildet.

Der Querschnitt Q der Senke in Fig. 13 entspricht einem gleichschenkligen, vorzugsweise einem gleichseitigen Dreieck, wobei die Hypotenuse des Dreiecks in der Ebene E der Oberseite der Deckfläche 23 liegt.

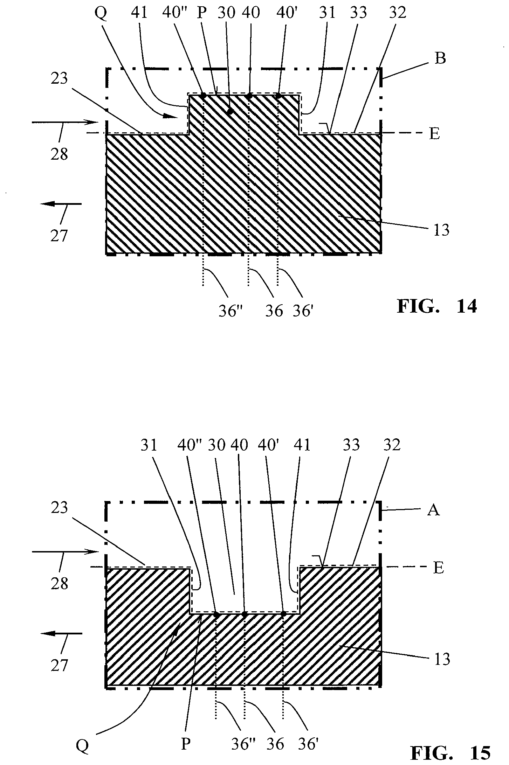

Ein Störelement 30 kann neben einem ansteigenden und einem abfallenden Linienabschnitt 31, 41 auch einen dazwischenliegenden Zwischenabschnitt P, K aufweisen (Figuren 14 bis 19). Der Punkt oder die Punkte des Übergangs von Zwischenabschnitt P, K zu einem ansteigenden oder einem abfallenden Linienabschnitt 31, 41 wird ebenfalls als Wendepunkt 40, 40' bzw. 40" verstanden. Der Zwischenabschnitt P, K kann ein beliebiges Höhenprofil aufweisen. Der Zwischenabschnitt P, K verläuft vorteilhaft geradlinig oder gekrümmt und kann sich auch aus mehreren Abschnitten zusammensetzen. Der Zwischenabschnitt P, K hat eine Länge und/oder Breite, die vorteilhaft geringer ist als ein Viertel, insbesondere ein Achtel der Messerbreite.

Im Ausführungsbeispiel nach Fig. 14 ist der Querschnitt Q des Störkörpers 30 viereckig gestaltet. Im gezeigten Ausführungsbeispiel ist ein rechteckförmiger Querschnitt ausgebildet; andere Proportionen des Querschnitts können vorteilhaft sein.

Der Querschnitt erhebt sich aus der Ebene E mit einem ansteigenden Linienabschnitt 41 der Höhenlinie 32 des Höhenprofils 33. Der ansteigende Linienabschnitt 41 hat mit der Ebene E einen rechten Winkel. In Strömungsrichtung 28 der Luft ist anschließend an den ansteigenden Linienabschnitt 41 ein Plateau P ausgebildet, welches sich bis zum abfallenden Linienabschnitt 31 erstreckt. Der ansteigende Linienabschnitt 41 beginnt auf Höhe der Ebene E; der abfallende Linienabschnitt 31 endet auf Höhe der Ebene E. Im gezeigten Ausführungsbeispiel ist das Plateau P parallel zur Ebene E gestaltet; das Plateau P könnte auch als konkave oder konvexe Wölbung gestaltet sein.

Ist das Plateau P plan ausgebildet, vorzugsweise plan parallel zur Ebene E, liegen zwischen dem ansteigenden Linienabschnitt 41 und dem abfallenden Linienabschnitt 31 eine Vielzahl von Wendepunkten 40, 40', 40". Allen Wendepunkten 40, 40', 40" ist gemeinsam, dass die Steigung der Höhenlinie 32 im Wendepunkt 40, 40', 40" "Null" ist. Das Plateau P ist somit ein Bereich oder Abschnitt der Höhenlinie 32, in der die Steigung der Höhenlinie 32 "Null" ist.

Ein Wendepunkt 40 liegt auf einer Normalen 36 auf der Mittelebene 35 (Figuren 4, 7) des Grundkörpers 13. Der Schnittpunkt der Normalen 36 mit der Deckfläche 24 bildet einen Referenzpunkt 37. Entsprechend liegt der Wendepunkt 40' auf einer Normalen 36' und der Wendepunkt 40" auf einer Normalen 36".

Im Ausführungsbeispiel nach Fig. 15 ist ein Störkörper 30 mit einem Querschnitt Q als Senke bzw. Vertiefung ausgebildet. Entsprechend den Ausführungen zu Fig. 14 wird die über die Deckfläche 23 in Pfeilrichtung 28 anströmende Luft zunächst auf den abfallenden Linienabschnitt 41 der Höhenlinie 32 des Höhenprofils 33 auftreffen. In Pfeilrichtung 28 folgt dem abfallenden Linienabschnitt 41 ein ansteigender Linienabschnitt 31, der an der Ebene E endet. Zwischen dem abfallenden Linienabschnitt 41 und dem ansteigenden Linienabschnitt 31 ist entsprechend dem Ausführungsbeispiel nach Fig. 14 ein Plateau P ausgebildet, welches den Boden der Senke bzw. Vertiefung des Störelementes 30 bildet. Das Plateau P ist im gezeigten Ausführungsbeispiel als ebene Fläche ausgebildet, die parallel zur Ebene E liegt. Eine konkave bzw. konvexe Ausbildung des Plateaus P kann vorteilhaft sein.

In der gezeigten ebenen Ausführungsform liegen auf dem Plateau P eine Vielzahl von Wendepunkten 40, 40', 40", denen gemeinsam ist, dass die Steigung der Höhenlinie 32 in den Wendepunkten 40, 40', 40" zu "Null" ist. Das Plateau P bildet somit einen Bereich bzw. einen Abschnitt der Höhenlinie 32 aus, in dem die Steigung der Höhenlinie "Null" ist. Das Plateau kann im weiteren Sinne als "flächiger" Wendepunkt bezeichnet werden.

Jeder der Wendepunkte 40, 40', 40" liegt auf einer Normalen 36, 36', 36" entsprechend den vorstehenden Ausführungen zu Fig. 14.

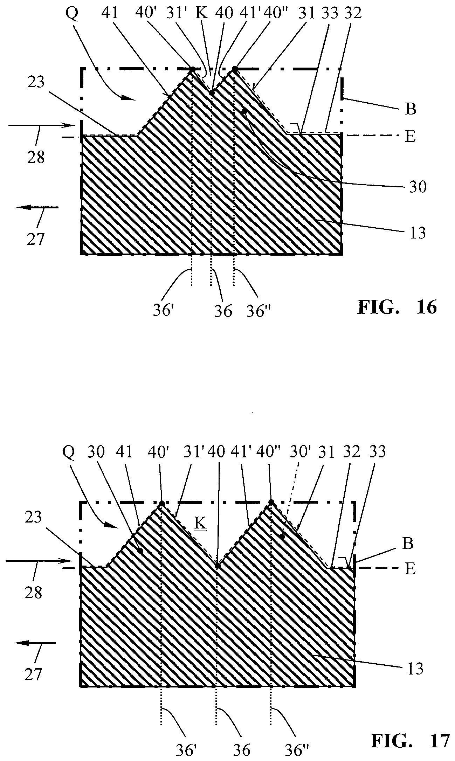

Im Ausführungsbeispiel nach Fig. 16 ist das Störelement 30 mit einem Querschnitt Q ausgebildet, der im Wesentlichen dreieckförmig ist. Der dreieckförmige Querschnitt Q weist im Bereich der Spitze eine kraterförmige Vertiefung K auf, wodurch über die Höhenlinie 32 des Höhenprofils 33 des Störkörpers mehrere Wendepunkte 40, 40', 40" ausgebildet sind. Wie Fig. 16 zeigt, wird die in Pfeilrichtung 28 anströmende Luft zunächst dem ansteigenden Linienabschnitt 41 der Höhenlinie 32 folgen, bis ein erster Hochpunkt, nämlich der Wendepunkt 40' erreicht ist. An den ansteigenden Linienabschnitt 41 schließt ein abfallender Linienabschnitt 31' an, der in den Krater K des Störkörpers 30 abfällt. Der ansteigende Linienabschnitt 41 weist eine erste Steigung und der abfallende Linienabschnitt 31' eine zweite Steigung auf, wobei im Wendepunkt 40' die Steigung zu "Null" ist.

An den ersten abfallenden Linienabschnitt 31' schließt - in einem Wendepunkt 40 - ein zweiter ansteigender Linienabschnitt 41' an, der aus dem Krater ansteigt, bis zu einem weiteren Wendepunkt 40", der mit der Steigung "Null" in einen abfallenden Linienabschnitt 31 übergeht. Die Wendepunkte 40' und 40" sind Hochpunkte der Höhenlinie 32; der Wendepunkt 40 ist ein Tiefpunkt der Höhenlinie 32.

Der ansteigende Linienabschnitt 41 erhebt sich aus der Ebene E; der abfallende Linienabschnitt 31 endet auf der Ebene E. Der Wendepunkt 40 im Krater K des Störkörpers 30 liegt mit einem Abstand oberhalb der Ebene E.

Das Ausführungsbeispiel nach Fig. 17 entspricht in der Grundform dem nach Fig. 16; die in Pfeilrichtung 28 anströmende Luft trifft zunächst auf einen aus der Ebene E ansteigenden Linienabschnitt 41' bis zu einem ersten Wendepunkt 40', der einen Hochpunkt bildet. An den ansteigenden Linienabschnitt 41' schließt ein abfallender Linienabschnitt 31' bis zu einem Tiefpunkt an, der einen Wendepunkt 40 bildet. An den abfallenden Linienabschnitt 31' schließt ein ansteigender Linienabschnitt 41 an, der erneut in einem Hochpunkt endet, welcher den Wendepunkt 40' darstellt. Über den Wendepunkt 40' geht der ansteigende Linienabschnitt 41' in einen weiteren abfallenden Linienabschnitt 31 über, der auf Höhe der Ebene E endet. Wie im Ausführungsbeispiel nach Fig. 16 liegen die Hochpunkte bildenden Wendepunkte 40', 40" auf einer Höhe. Im Unterschied zu Fig. 16 ist in Fig. 17 der Tiefpunkt, d. h. der Wendepunkt 40 im Krater K derart vorgesehen, dass er auf der Höhe der Ebene E liegt. Ein Ausführungsbeispiel nach Fig. 17 kann auch derart beschrieben werden, dass zwei Störelemente 30 und 30' vorgesehen sind, die in Strömungsrichtung 28 der Luft aneinander anschließen.

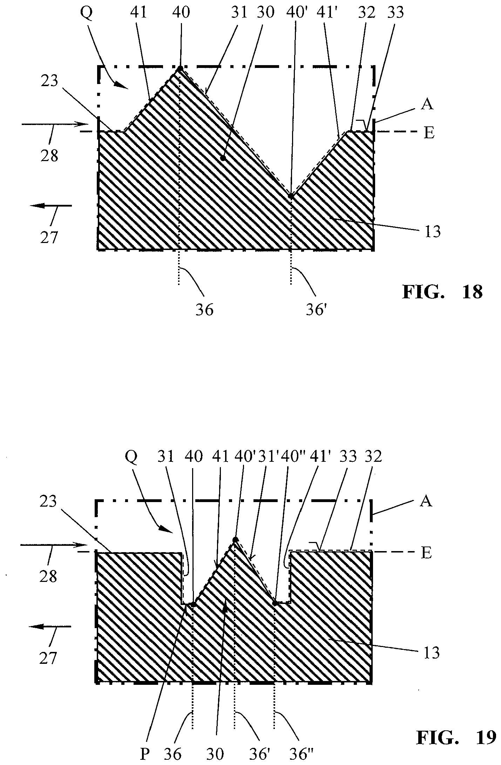

Im Ausführungsbeispiel nach Fig. 18 ist der Störkörper 30 aus einer Kombination einer Erhebung und einer Vertiefung gebildet. Die Erhebung liegt oberhalb der Ebene E, während die Vertiefung unterhalb der Ebene E liegt. Die in Pfeilrichtung 28 anströmende Luft trifft zunächst auf den aus der Ebene E ansteigenden Linienabschnitt 41' und erhebt sich bis zu einem Hochpunkt, der den Wendepunkt 40 bildet. An den ansteigenden Linienabschnitt 41 schließt der abfallende Linienabschnitt 31 an, der bis unterhalb der Ebene E auf einen Tiefpunkt abfällt, der einen weiteren Wendepunkt 40' bildet. Von dem Tiefpunkt führt ein ansteigender Linienabschnitt 41' zurück auf die Höhe der Ebene E.

Im Ausführungsbeispiel nach Fig. 19 ist innerhalb einer Vertiefung bzw. Senke unterhalb der Ebene E eine Erhebung 30 vorgesehen, die im gezeigten Ausführungsbeispiel im Querschnitt dreieckig ist. Die Vertiefung ist - ähnlich Fig. 15 - im Wesentlichen rechteckförmig, wobei die dreieckförmige Erhebung mit einem Abstand zu den ansteigenden Wänden der Vertiefung liegt.

Der Boden der Vertiefung bildet - ähnlich Fig. 15 - ein Plateau P mit mehreren möglichen Wendepunkten 40 der Steigung "Null".

Die in Pfeilrichtung 28 anströmende Luft trifft zunächst auf einen abfallenden Linienabschnitt 31, der unterhalb der Ebene E bis auf das Plateau P, dem Boden der Ausnehmung, abfällt. Auf den Boden der Ausnehmung folgt die Erhebung des Störelementes 30, welche mit einem ansteigenden Linienabschnitt 41 bis auf einen Hochpunkt, einen weiteren Wendepunkt 40' ansteigt. Nach dem Wendepunkt 40' folgt ein abfallender Linienabschnitt 31', der bis auf den Boden der Senke verläuft und in einem weiteren Wendepunkt 40" endet, der - ebenso wie der erste Wendepunkt 40 - auf der Höhe des Plateaus P liegt. An den Boden der Senke anschließend folgt ein ansteigender Linienabschnitt 41', der bis zur Ebene E ansteigt. Die Höhenlinie 32 des Höhenprofils 33 weist somit zwei abfallende Linienabschnitte 31 und 31' und zwei ansteigende Linienabschnitte 41 und 41' auf. Die Tiefpunkte bildenden Wendepunkte 40 und 40" liegen auf der Höhe des Bodens der rechteckförmigen Vertiefung; der einen Hochpunkt bildende Wendepunkt 40' zwischen dem ansteigenden Linienabschnitt 41 und dem abfallenden Linienabschnitt 31' liegt oberhalb der Ebene E, ragt somit aus der Vertiefung heraus. Es kann auch vorgesehen sein, dass der einen Hochpunkt bildende Wendepunkt 40' unterhalb der Ebene E liegt.

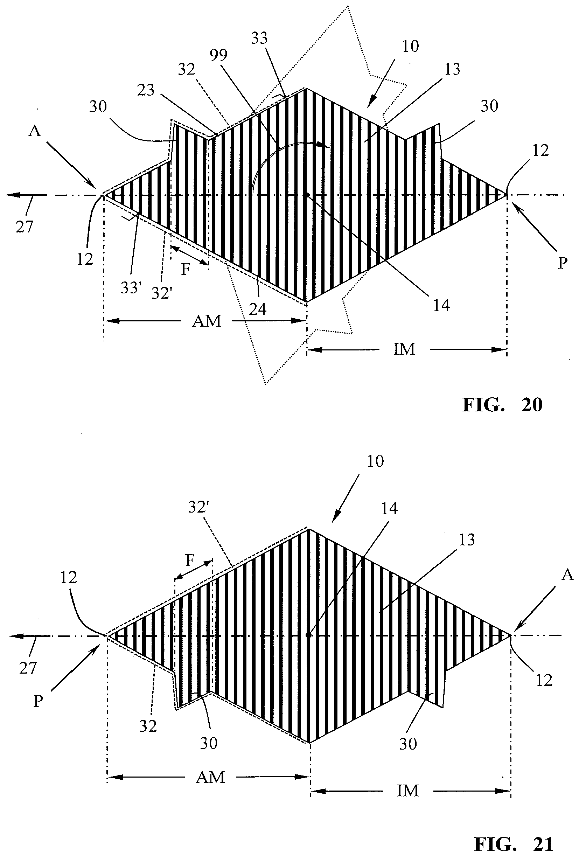

Die Fig. 20 bis 23 zeigen Querschnitte von Schneidmessern 10, die als Wendemesser ausgebildet sind.

Um im Ausführungsbeispiel nach Fig. 20 bei Wendbarkeit des Schneidmessers 10 um die Längsmittelachse in Pfeilrichtung 99 die erfindungsgemäße Wirkung der Geräuschreduktion in jeder Wendelage zu erzielen, kann sowohl an der Oberfläche der vorlaufenden Messerhälfte AM als auch an der Oberfläche der nachlaufenden Messerhälfte IM ein Störelement 30 vorgesehen sein. Diese konstruktive Gestaltung stellt sicher, dass die Höhenprofile 33 und 33' der oberen und der unteren Deckfläche 23, 24 der Messeroberseite und der Messerunterseite unterschiedlich sind und ein unterschiedlicher Strömungsverlauf auf der oberen und der unteren Deckfläche 23, 24, d.h. der Messeroberseite und der Messerunterseite, erzielt wird. Unabhängig von der Wendelage des Schneidmessers 10 hat die aktive Messerhälfte AM eine im Querschnitt asymmetrische Form, wodurch eine Geräuschreduktion erzielbar ist.

Wird das Schneidmesser 10 in Pfeilrichtung 99 gedreht, wie Fig. 21 zeigt, gelangt der Punkt A der vormals aktiven Messerschneide 12 in die inaktive Messerhälfte IM, während der Punkt P der vormals inaktiven Messerschneide 12 in der aktiven Messerhälfte AM zu liegen kommt. Sobald die inaktive Messerschneide durch Wenden des Schneidmessers 12 aktiv wird, wird das inaktive Störelement 30 zu einem aktiven Störelement und umgekehrt. Ein aktives Störelement bezeichnet ein Störelement 30 innerhalb der aktiven Messerhälfte AM. Ein inaktives Störelement bezeichnet ein Störelement 30 in der inaktiven Messerhälfte IM. Für das inaktive Störelement gelten die gleichen Ausführungen wie für das aktive Störelement. Zwischen inaktiver Messerschneide und Längsmittelachse kann mindestens ein inaktives Störelement auf einer Deckfläche 23, 24, also der Messerunterseite oder der Messeroberseite vorgesehen sein.

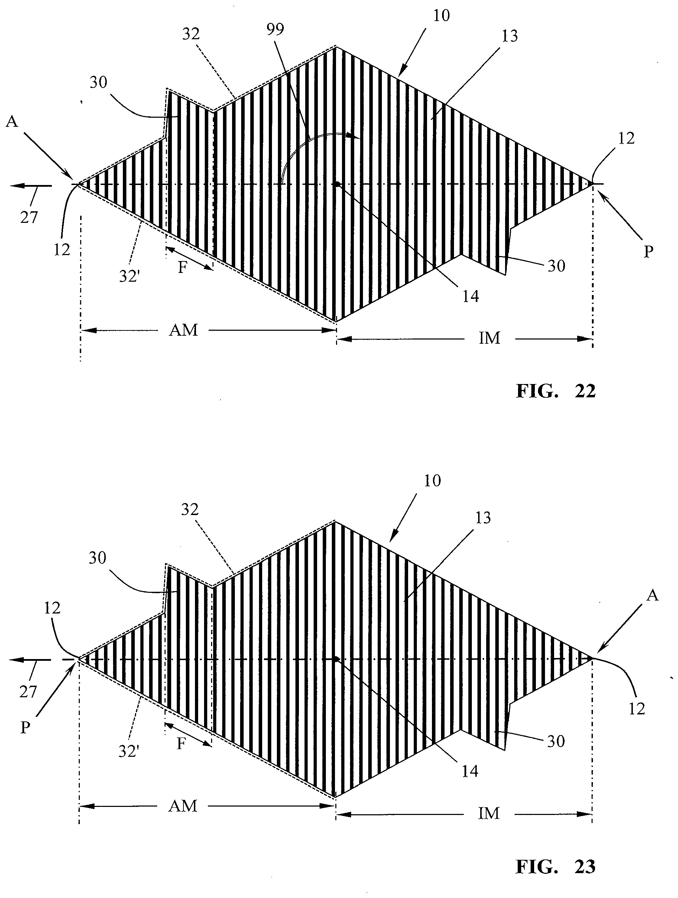

Aktives und inaktives Störelement 30 können auf derselben Deckfläche oder auch auf unterschiedlichen Deckflächen liegen, wie die Fig. 20 bis 23 zeigen. Eine zweckmäßige Ausführung zeigen die Fig. 22 und 23, in denen die Störelemente 30 vorteilhaft punktsymmetrisch zur Längsmittelachse 14 des Grundkörpers 13 liegen. Fig. 22 zeigt eine erste Arbeitslage des Schneidmessers 10; Fig. 23 zeigt eine um 180° um die Längsmittelachse 14 gewendete Arbeitslage des Schneidmessers 10. Die obere Deckfläche 23 liegt in Einbaulage oben, die untere Deckfläche 24 liegt in Einbaulage unten. Durch das Wenden des Schneidmessers 10 wird die ehemals obere Deckfläche 23 zur unteren Deckfläche 24 und umgekehrt. In beiden Arbeitslagen liegt das aktive Störelement 30 in der aktiven Messerhälfte AM der gleichen - im Ausführungsbeispiel oberen - Deckfläche und insbesondere am gleichen Ort dieser Deckfläche.

Zweckmäßig kann das inaktive Störelement auch auf derselben Deckfläche liegen wie das aktive Störelement, insbesondere spiegelsymmetrisch zur Längsmittelachse 14 angeordnet sein (Fig. '20, 21). Allen gezeigten Ausführungsbeispielen ist gemeinsam, dass sich die oberen und unteren Deckflächen in ihrem Höhenprofil im angeströmten aktiven Messerbereich AM unterscheiden, d. h. in einem Bereich zwischen der aktiven Messerschneide 12 und der Längsmittelachse 14 durch die Anordnung des mindestens einen Störelementes 30 einen asymmetrischen Querschnitt haben.

Wie die verschiedenen Ausführungsbeispiele deutlich machen, ist auf einer ersten - z. B. oberen - Deckfläche 23 ein erstes Störelement 30 vorgesehen, während im Bereich dieses Störelementes 30 auf der gegenüberliegenden zweiten - unteren - Deckfläche ein Bereich F vorgesehen ist, der kein in der geometrischen Ausdehnung gleiches und insbesondere gar kein Störelement aufweist.

Wie in Fig. 4A schematisch wiedergegeben, ist das mindestens eine aktive Störelement derart angeordnet, dass die zwischen aktiver Messerschneide und nächstliegendem Wendepunkt bzw. zugehörigem Referenzpunkt gemessenen Längen U, U' der gegenüberliegenden Höhenlinien 32, 32' unterschiedlich sind. Zweckmäßig unterscheiden sich die zwischen aktiver Messerschneide 12 und Längsmittelachse 14 gemessenen Längen S, S' der gegenüberliegenden Höhenlinien 32, 32' (Fig. 4A).

Die ungestörten Längen V, V' des frei von Störelementen 30 gehaltenen Bereichs F auf der ersten - oberen - und der zweiten - unteren - Deckfläche sind unterschiedlich. Die ungestörte Länge V von der aktiven Messerschneide 12 bis zu einem ersten, nächstliegenden aktiven Störelement 30 auf einer Deckfläche 23 ist unterschiedlich zu der im selben Querschnitt gemessenen Länge V' von der aktiven Messerschneide 12 bis zu einem nächstliegenden aktiven Störelement 30 auf der gegenüberliegenden Deckfläche 24. Weist die gegenüberliegende Deckfläche kein aktives Störelement 30 auf, endet die Länge V' auf Höhe der Längsmittelachse 14. Zur vereinfachten Darstellung sind die Längen S, S', U, U', V, V' derart dargestellt, dass diese dem Höhenprofil 32 folgen. Für den Vergleich von Längen sind die Abwicklungen dieser Darstellungen heranzuziehen. Eine Anordnung des mindestens einen aktiven Störelements, welche zumindest eine der genannten Längenbeziehungen erfüllt, gewährleistet einen asymmetrischen Querschnitt und damit eine Geräuschreduktion. Die Längenbeziehungen vergleichen Längen direkt gegenüberliegender Höhenlinien, d. h. Höhenlinien, die im selben Querschnitt des Schneidmessers 10 ermittelt werden.

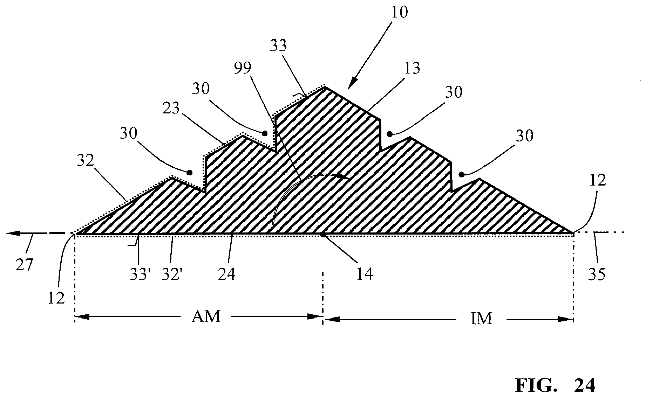

Im Ausführungsbeispiel nach Fig. 24 ist ein weiteres Ausführungsbeispiel eines Schneidmessers im Querschnitt gezeigt, wobei gleiche Teile mit den gleichen Bezugszeichen aus den vorherigen Ausführungsbeispielen versehen sind. Der Querschnitt des Grundkörpers 13 ist dreieckig, wobei die in den vorherigen Ausführungsbeispielen angegebene Mittelebene 35 bei dem dreieckförmigen Grundkörper 13 nach Fig. 24 mit der unteren Deckfläche 24 zusammenfällt. Das dargestellte Schneidmesser ist wiederum ein Wendemesser mit einer aktiven Messerhälfte AM und einer inaktiven Messerhälfte IM. Wird das Schneidmesser 10 in Pfeilrichtung 99 gedreht, verlagert sich die vormals aktive Messerschneide 12 in die inaktive Messerhälfte IM, während die vormals inaktive Messerschneide 12 in der aktiven Messerhälfte AM zu liegen kommt.

In Fig. 25 ist die Einschnürung E2 zwischen dem Befestigungsabschnitt 11 und dem Grundkörper 13 geringer ausgebildet als die Einschnürung E1 z. B. in Fig. 2. Der Befestigungsabschnitt 11 hat im Ausführungsbeispiel nach Fig. 25 eine erste Breite K1 und der Grundkörper 13 eine zweite Breite K2. Die Breite K2 ist eine maximale Breite des Grundkörpers 13. Die zweite Breite K2 des Grundkörpers 13 ist kleiner als die erste Breite K1 des Befestigungsabschnittes 11. Im gezeigten Ausführungsbeispiel nach Fig. 25 hat die Einschnürung zwischen dem Befestigungsabschnitt 11 und dem Ende 16 des Grundkörpers 13 eine Breite E2, die kleiner als die erste Breite K1 des Befestigungsabschnitts 11 und gleich oder größer als die Breite K2 des Grundkörpers 13 ist. Im gezeigten Ausführungsbeispiel nach Fig. 25 entspricht die Breite E2 der Einschnürung etwa dem Mittelwert der ersten Breite K1 und der zweiten Breite K2.

Auch die Ausführung der Dicke des Schneidmessers 10 vom Befestigungsabschnitt 11 bis zum zweiten Ende 17 des Grundkörpers 13 unterscheidet sich von den vorstehend beschriebenen Ausführungsbeispielen. Während in den vorstehenden Ausführungsbeispielen zwischen der Dicke D1 des Befestigungsabschnittes 11 und der Dicke D2 des Grundkörpers 13 eine Stufe 70 mit einem bevorzugt gerundeten Dickensprung ausgebildet ist, zeigt das Ausführungsbeispiel nach den Fig. 25 und 26 einen sich insbesondere gleichmäßig verjüngenden Übergang Y von der Dicke D1 zu der Dicke D2. Wie Fig. 26 zeigt, erstreckt sich der Übergang Y von dem Befestigungsabschnitt 11 mit der Dicke D1 bis etwa zur halben Länge, insbesondere bis zur halben Länge des Grundkörpers 13 auf die Dicke D2. Der Längenabschnitt Z des Grundkörpers 13 zwischen der halben Länge und dem zweiten Ende 17 des Grundkörpers 13 bzw. dem freien Messerende 15 hat vorzugsweise eine gleiche Dicke D2.

## Patentansprüche

1. Schneidmesser für einen Werkzeugkopf (1) eines Freischneiders, bestehend aus einem flachen, länglichen Grundkörper (13),
- wobei der Grundkörper (13) eine Längsmittelachse (14) aufweist, die sich von einem ersten Ende (16) zu einem zweiten Ende (17) des Grundkörpers (13) erstreckt,
- und der Grundkörper (13) Längsränder (18, 19) aufweist, die sich mit einem Abstand (20) zur Längsmittelachse (14) von dem ersten Ende (16) zu dem zweiten Ende (17) des Grundkörpers (13) erstrecken,
- und der Grundkörper (13) eine erste und eine zweite Deckfläche (23, 24) umfasst, zwischen denen eine Mittelebene (35) liegt,
- wobei eine Deckfläche (23, 24) in einer ersten Richtung (25) quer zur Längsmittelachse (14) von den Längsrändern (18, 19) des Grundkörpers (13) begrenzt ist und in einer zweiten Richtung (26) längs der Längsmittelachse (14) von dem ersten Ende (16) und dem zweitem Ende (17) des Grundkörpers (13) begrenzt ist,
- und an dem ersten Ende (16) des Grundkörpers (13) eine Befestigungskontur (11) zur Montage des Schneidmessers (10) am Werkzeugkopf (1) vorgesehen ist,
- und das zweite Ende (17) des Grundkörpers (13) ein freies Messerende (15) des Schneidmessers (10) bildet,
- und an beiden Längsrändern (18, 19) des Grundkörpers (13) jeweils eine Messerschneide (12) ausgebildet ist,
- und im Betrieb des Werkzeugkopfes entweder die eine in Drehrichtung (R) vorne liegende Messerschneide (12) des einen Längsrandes (18) oder die in Drehrichtung (R) vorne liegende andere Messerschneide (12) des anderen Längsrandes (19) aktiv ist,
**dadurch gekennzeichnet,**
- **dass** mindestens eine der Deckflächen (23, 24) in einem Bereich zwischen der aktiven Messerschneide (12) und der Längsmittelachse (14) des Grundkörpers (13) zumindest ein topografisches Störelement (30) aufweist,
- **dass** das topografische Störelement (30) das Höhenprofil (33) zumindest der einen Deckfläche (23, 24) gestaltet,
- wobei eine Höhenlinie (32) des ersten Höhenprofils (33) auf der zumindest einen Deckfläche (23, 24) quer zur Längsmittelachse (14) des Grundkörpers (13) von der Messerschneide (12) in Richtung zur Längsmittelachse (14) über das Störelement (30) verläuft,
- und auf der zur Mittelebene (35) gegenüberliegenden Deckfläche (24, 23) ein gegenüberliegendes Höhenprofil (33') ausgebildet ist, wobei eine Höhenlinie (32') des gegenüberliegenden Höhenprofils (33') von der Messerschneide (12) in Richtung zur Längsmittelachse (14) verläuft,
- und die Linienpunkte (L1, L2, L3, L4, Ln) der Höhenlinie (32) des ersten Höhenprofils (33) den Linienpunkten (L1', L2', L3', L4', Ln') der gegenüberliegenden Höhenlinie (32') des gegenüberliegenden Höhenprofils (33') auf Normalen (36) zur Mittelebene (35) des Grundkörpers (13) gegenüberliegen,
- **dass** die Höhenlinie (32) des ersten Höhenprofils (33) auf der zumindest einen Deckfläche (23, 24) und die gegenüberliegende Höhenlinie (32') auf der gegenüberliegenden Deckfläche (24, 23) nicht deckungsgleich sind,
- wobei einem in der einen Deckfläche (23) angeordneten Störelement (30) in dem gegenüberliegenden Bereich der anderen Deckfläche (24) kein weiteres Störelement gegenüberliegt, derart, dass die über die eine Deckfläche (23) strömende Luft durch das Störelement (30) gestört ist und die in dem gegenüberliegenden Bereich über die andere Deckfläche (24) strömende Luft weitgehend ungestört strömt,
- wobei die Höhenlinie (32) des ersten Höhenprofils (33) im Bereich des Störelementes (30) einen ersten, ansteigenden Linienabschnitt (41) und einen zweiten, abfallenden Linienabschnitt (31) aufweist,
- und zumindest ein zwischen den Linienabschnitten (31, 41) der Höhenlinie (32) liegender Wendepunkt (40) Teil des Störelementes (30) ist.

2. Schneidmesser nach Anspruch 1,
**dadurch gekennzeichnet,**
- **dass** der zwischen den Linienabschnitten (31, 41) der Höhenlinie (32) liegende zumindest eine Wendepunkt (40) des topografischen Störelementes (30) der ersten Deckfläche (23) auf einer Normalen (36) zur Mittelebene (35) einen ersten Abstand (42) zur Mittelebene (35) aufweist,
- und **dass** ein bezogen auf die gleiche Normale (36) zur Mittelebene (35) dem zumindest einem Wendepunkt (40) direkt gegenüberliegender Referenzpunkt (37) der zweiten Deckfläche (24) einen Referenzabstand (43) zur Mittelebene (35) aufweist,
- und **dass** der erste Abstand (42) ungleich dem Referenzabstand (43) ist.

3. Schneidmesser nach Anspruch 2,
**dadurch gekennzeichnet, dass** sich der erste Abstand (42) und der zweite Abstand (43) um eine Abstandsdifferenz von bis zu ± 100% unterscheiden.

4. Schneidmesser nach Anspruch 2,
**dadurch gekennzeichnet, dass** der Absolutwert der Abstandsdifferenz zwischen dem ersten Abstand (42) und dem zweiten Abstand (43) in einem Bereich von einem Betrag zwischen 0,2 mm bis 2 mm liegt.

5. Schneidmesser nach einem der Ansprüche 1 bis 4,
**dadurch gekennzeichnet, dass** die Messerschneide (12) durch eine Längskante (18, 19) einer Schneidenfläche (38) gebildet ist, und die Schneidenfläche (38) zusammen mit einer Messerrückenfläche (48) eine Deckfläche (23, 24) des Grundkörpers (13) bildet, dass die Messerrückenfläche (48) von der Längsmittelachse (14) des Grundkörpers (13) geteilt ist, und das topografische Störelement (30) in einem Bereich zwischen der Schneidenfläche (38) und der Längsmittelachse (14) des Grundkörpers (13) liegt.

6. Schneidmesser nach einem der Ansprüche 1 bis 5,
**dadurch gekennzeichnet, dass** sich das Störelement (30) längs der Messerschneide (12) erstreckt und eine Breite (B) quer zur Messerschneide (12) aufweist.

7. Schneidmesser nach einem der Ansprüche 1 bis 6,
**dadurch gekennzeichnet, dass** das Störelement (30) eine Erhebung ist, die aus der Deckfläche (23, 24) vorsteht.

8. Schneidmesser nach einem der Ansprüche 1 bis 6,
**dadurch gekennzeichnet, dass** das Störelement (30) eine Vertiefung ist, die als Senke in der Deckfläche (23, 24) ausgebildet ist.

9. Schneidmesser nach einem der Ansprüche 1 bis 8,
**dadurch gekennzeichnet, dass** das Störelement (30) als Längsrippe (39) oder als Längsnut (29) ausgebildet ist.

10. Schneidmesser nach Anspruch 9,
**dadurch gekennzeichnet, dass** die Längsrippe (39) oder die Längsnut (29) mit der Längsmittelachse (14) einen Winkel (34) im Bereich von 0° bis 10° einschließt, vorzugsweise einen Winkel (34) im Bereich zwischen 2° und 4° einschließt.

11. Schneidmesser nach Anspruch 9 oder 10,
**dadurch gekennzeichnet, dass** sich die Längsnut (29) oder die Längsrippe (39) zumindest über eine Teillänge (S) des Grundkörpers (13) von dem ersten Ende (16) des Grundkörpers (13) in Richtung auf das freie Messerende (15) erstreckt.

12. Schneidmesser nach Anspruch 9 oder 10,
**dadurch gekennzeichnet, dass** sich die Längsnut (29) oder die Längsrippe (39) ohne Unterbrechung von dem ersten Ende (16) des Grundkörpers (13) bis zum freien Messerende (15) erstreckt.

13. Schneidmesser nach einem der Ansprüche 9 bis 12,
**dadurch gekennzeichnet, dass** die Längsrippe (39) oder die Längsnut (29) am freien Messerende (15) ausläuft.

14. Schneidmesser nach einem der Ansprüche 5 bis 13,
**dadurch gekennzeichnet, dass** die Messerrückenfläche (48) zumindest in einem Teilbereich als flache Ebene (44) ausgebildet ist.

15. Schneidmesser nach einem der Ansprüche 1 bis 14,
**dadurch gekennzeichnet, dass** der Grundkörper (13) aus Kunststoff besteht.

16. Schneidmesser nach einem der Ansprüche 1 bis 15,
**dadurch gekennzeichnet, dass** das Störelement (30) eine konstruktiv unsymmetrische Querschnittsform des Grundkörpers (13) zwischen der aktiven Schneide (12) und der Längsmittelachse (14) des Grundkörpers (13) bewirkt.

17. Schneidmesser nach einem der Ansprüche 1 bis 16,
**dadurch gekennzeichnet, dass** sich im angeströmten aktiven Messerbereich (AM) die oberen und unteren Deckflächen (23, 24) in ihrem Höhenprofil (33, 33') unterscheiden, derart, dass in einem Bereich zwischen der aktiven Messerschneide (12) und der Längsmittelachse (14) des Grundkörpers (13) durch die Anordnung des mindestens einen Störelementes (30) ein asymmetrischer Querschnitt gegeben ist.

18. Schneidmesser nach einem der Ansprüche 1 bis 17,
**dadurch gekennzeichnet, dass** sich die zwischen der aktiven Messerschneide (12) und der Längsmittelachse (14) des Grundkörpers (13) gemessenen Längen (S, S') der gegenüberliegenden Höhenlinien (32, 32') unterscheiden.

## Claims

1. Cutting blade for a tool head (1) of a string mower, consisting of a flat, oblong base body (13),
- wherein the base body (13) has a longitudinal central axis (14) extending from a first end (16) to a second end (17) of the base body (13),
- and the base body (13) has longitudinal edges (18, 19) extending at a distance (20) from the longitudinal central axis (14) from the first end (16) to the second end (17) of the base body (13),
- and the base body (13) comprises a first and a second cover surface (23, 24), between which a central plane (35) lies,
- wherein a cover surface (23, 24) is bounded in a first direction (25) transverse to the longitudinal central axis (14) by the longitudinal edges (18, 19) of the base body (13) and in a second direction (26) along the longitudinal central axis (14) by the first end (16) and the second end (17) of the base body (13),
- and a fastening contour (11) is provided at the first end (16) of the base body (13) for mounting the cutting blade (10) on the tool head (1),
- and the second end (17) of the base body (13) forms a free blade end (15) of the cutting blade (10),
- and a blade edge (12) is formed at each of the two longitudinal edges (18, 19) of the base body (13),
- and in the operation of the tool head either the one blade edge (12) of the one longitudinal edge (18), which is leading in the direction of rotation (R), or the other blade edge (12) of the other longitudinal edge (19), which is leading in the direction of rotation (R), is active,
**characterised in that**
- at least one of the cover surfaces (23, 24) has at least one topographic interference element (30) in a region between the active blade edge (12) and the longitudinal central axis (14) of the base body (13),
- **in that** the topographic interference element (30) forms the height profile (33) of at least the one cover surface (23, 24)
- wherein a contour line (32) of the first height profile (33) extends on the at least one cover surface (23, 24) transversely to the longitudinal central axis (14) of the base body (13) from the blade edge (12) towards the longitudinal central axis (14) via the interference element (30),
- and an opposite height profile (33') is formed on the cover surface (23, 24) lying opposite with respect to the central plane (35), a contour line (32') of the opposite height profile (33') extending from the blade edge (12) towards the longitudinal central axis (14),
- and the line points (L1, L2, L3, L4, Ln) of the contour line (32) of the first height profile (33) lie opposite line points (L1', L2', L3', L4', Ln') of the opposite contour line (32') of the opposite height profile (33') on normals (36) to the central plane (35) of the base body (13),
- **in that** the contour line (32) of the first height profile (33) on the at least one cover surface (23, 24) and the opposite contour line (32') on the opposite cover surface (23, 24) are not congruent,
- wherein no further interference element is placed opposite an interference element (30) located in the one cover surface (23) in the opposite region of the other cover surface (24), so that the air flowing across the one cover surface (23) is interfered with by the interference element (30) and the air flowing across the other cover surface (24) in the opposite region flows largely without interference,
- wherein the contour line (32) of the first height profile (33) has a first, rising line section (41) and a second, falling line section (31) in the region of the interference element (30),
- and at least one reversal point (40) lying between the line sections (31, 41) of the contour line (32) is a part of the interference element (30).

2. Cutting blade according to claim 1,
**characterised in that**
- the at least one reversal point (40) - lying between the line sections (31, 41) of the contour line (32) - of the topographic the interference element (30) of the first cover surface (23) has a first distance (42) from the central plane (35) on a normal (36) to the central plane (35),
- and **in that** a reference point (37) of the second cover surface (24), which is directly opposite the at least one reversal point (40) with respect to the same normal (36) to the central plane (35), has a reference distance (43) from the central plane (35),
- and **in that** the first distance (42) is unequal to the reference distance (43).

3. Cutting blade according to claim 2,
**characterised in that** the first distance (42) and the second distance (43) differ by a distance differential of up to ±100%.

4. Cutting blade according to claim 2,
**characterised in that** the absolute value of the distance differential between the first distance (42) and the second distance (43) lies in a range of an amount between 0.2 mm and 2 mm.

5. Cutting blade according to any of claims 1 to 4,
**characterised in that** the blade edge (12) is represented by a longitudinal edge (18, 19) of a blade edge surface (38) and the blade edge surface (38) together with a blade rear surface (48) forms a cover surface (23, 24) of the base body (13), **in that** the blade rear surface (48) is divided by the longitudinal central axis (14) of the base body (13), and **in that** the topographic interference element (30) lies in a region between the blade edge surface (38) and the longitudinal central axis (14) of the base body (13).

6. Cutting blade according to any of claims 1 to 5,
**characterised in that** the interference element (30) extends along the blade edge (12) and has a width (B) transverse to the blade edge (12).

7. Cutting blade according to any of claims 1 to 6,
**characterised in that** the interference element (30) is a raised area projecting from the cover surface (23, 24).

8. Cutting blade according to any of claims 1 to 6,
**characterised in that** the interference element (30) is a recess designed as a depression in the cover surface (23, 24).

9. Cutting blade according to any of claims 1 to 8,
**characterised in that** the interference element (30) is designed as a longitudinal rib (39) or a longitudinal groove (29).

10. Cutting blade according to claim 9,
**characterised in that** the longitudinal rib (39) or the longitudinal groove (29) encloses with the longitudinal central axis (14) an angle (34) in the range of 0° to 10°, preferably an angle (34) in the range of 2° to 4°.

11. Cutting blade according to claim 9 or 10,
**characterised in that** the longitudinal groove (29) or the longitudinal rib (39) extends at least along a sub-length (S) of the base body (13) from the first end (16) of the base body (13) towards the free blade end (15).

12. Cutting blade according to claim 9 or 10,
**characterised in that** the longitudinal groove (29) or the longitudinal rib (39) extends from the first end (16) of the base body (13) towards the free blade end (15) without interruption.

13. Cutting blade according to any of claims 9 to 12,
**characterised in that** the longitudinal rib (39) or the longitudinal groove (29) ends at the free blade end (15).

14. Cutting blade according to any of claims 5 to 13,
**characterised in that** the blade rear surface (48) is designed as a flat plane (44) in at least a sub-region.

15. Cutting blade according to any of claims 1 to 14,
**characterised in that** the base body (13) consists of plastic.

16. Cutting blade according to any of claims 1 to 15,
**characterised in that** the interference element (30) causes a structurally asymmetric cross-sectional shape of the base body (13) between the active blade edge (12) and the longitudinal central axis (14) of the base body (13).

17. Cutting blade according to any of claims 1 to 16,
**characterised in that** the upper and lower cover surfaces (23, 24) differ in the active blade region (AM) subject to flow in their height profile (33, 33') in such a way that an asymmetric cross-section is produced by the arrangement of the at least one interference element (30) in a region between the active blade edge (12) and the longitudinal central axis (14) of the base body (13).

18. Cutting blade according to any of claims 1 to 17,
**characterised in that** the lengths (S, S') of the opposite contour lines (32, 32') as measured between the active blade edge (12) and the longitudinal central axis (14) of the base body (13) differ.

## Revendications

1. Lame coupante pour une tête d'outil (1) d'une débroussailleuse, composée d'un corps de base (13) plat et allongé,
- dans laquelle le corps de base (13) présente un axe longitudinal médian (14) qui s'étend d'une première extrémité (16) à une deuxième extrémité (17) du corps de base (13), et
- le corps de base (13) présente des bords longitudinaux (18, 19) qui s'étendent, à une distance (20) de l'axe longitudinal médian (14), de la première extrémité (16) à la deuxième extrémité (17) du corps de base (13),
- et le corps de base (13) comprend des première et deuxième surfaces de recouvrement (23, 24) entre lesquelles est situé un plan médian (35),
- dans laquelle une surface de recouvrement (23, 24) est limitée, dans une première direction (25) transversale par rapport à l'axe longitudinal médian (14), par les bords longitudinaux (18, 19) du corps de base (13) et, dans une deuxième direction (26) le long de l'axe longitudinal médian (14), par la première extrémité (16) et la deuxième extrémité (17) du corps de base (13),
- et il est prévu sur la première extrémité (16) du corps de base (13) un contour de fixation (11) pour le montage de la lame coupante (10) sur la tête d'outil (1), et
- et la deuxième extrémité (17) du corps de base (13) forme une extrémité de lame libre (15) de la lame coupante (10),
- et un tranchant de lame (12) est formé sur les deux bords longitudinaux (18, 19) du corps de base (13),
- et lors du fonctionnement de la tête d'outil, soit un tranchant de lame (12), situé à l'avant dans la direction de rotation (R), d'un bord longitudinal (18), soit l'autre tranchant de lame (12), situé à l'avant dans la direction de rotation (R), de l'autre bord longitudinal (19) est actif,
**caractérisée en ce que** l'une au moins des surfaces de recouvrement (23, 24) présente dans une zone située entre le tranchant de lame actif (12) et l'axe longitudinal médian (14) du corps de base (13) au moins un élément topographique perturbateur (30),
- **en ce que** l'élément topographique perturbateur (30) structure le profil en hauteur (33) de ladite au moins une surface de recouvrement (23, 24),
- dans laquelle une ligne de hauteur (32) du premier profil de hauteur (33) sur la au moins une surface de recouvrement (23, 24) s'étend, transversalement par rapport à l'axe longitudinal médian (14) du corps de base (13), à du tranchant de lame (12) en direction de l'axe longitudinal médian (14) en passant par l'élément perturbateur (30),
- et sur la surface de recouvrement (24, 23) opposée au plan médian (35) est formé un profil de hauteur opposé (33'), dans lequel une ligne de hauteur (32') du profil de hauteur opposé (33') s'étend du tranchant de lame (12) en direction de l'axe longitudinal médian (14),
- et les points de ligne (L1, L2, L3, L4, Ln) de la ligne de hauteur (32) du premier profil de hauteur (33) sont opposés aux points de ligne (L1', L2', L3', L4', Ln') de la ligne de hauteur opposée (32') du premier profil de hauteur opposé (33') sur des normales (36) au plan médian (35) du corps de base (13),
- **en ce que** la ligne de hauteur (32) du premier profil de hauteur (33) sur la au moins une surface de recouvrement (23, 24) et la ligne de hauteur opposée (32') sur la surface de recouvrement opposée (24, 23) ne sont pas coïncidentes,
- dans lequel il n'y a pas d'autre élément perturbateur opposé à un élément perturbateur (30) disposé dans une surface de recouvrement (23) dans la zone opposée de l'autre surface de recouvrement (24), de telle sorte que l'air balayant une surface de recouvrement (23) soit perturbé par l'élément perturbateur (30), et l'air passant dans la zone opposée sur l'autre surface de recouvrement (24) s'écoule quasiment sans perturbation,
- dans lequel la ligne de hauteur (32) du premier profil de hauteur (33) présente, dans la zone de l'élément perturbateur (30), une première section de ligne (41), montante, et une deuxième section de ligne (31), descendante,
- et au moins un point d'inflexion (40) fait partie de l'élément perturbateur (30).

2. Lame coupante selon la revendication 1,
**caractérisée**
- **en ce que** le au moins un point d'inflexion (40), situé entre les sections de ligne (31, 41) de la ligne de hauteur (32), de l'élément topographique perturbateur (30) de la première surface de recouvrement (23) présente sur une normale (36) au plan médian (35) une première distance (42) par rapport au plan médian (35),
- et **en ce qu'**un point de référence (37) de la deuxième surface de recouvrement (24) directement opposé au au moins un point d'inflexion (40) par rapport à la même normale (36) au plan médian (35) présente une distance de référence (43) par rapport au plan médian (35),
- et **en ce que** la première distance (42) est différente de la distance de référence (43).

3. Lame coupante selon la revendication 2,
**caractérisée en ce que** la première distance (42) et la deuxième distance (43) présentent une différence de distance allant jusqu'à ± 100 %.

4. Lame coupante selon la revendication 2,
**caractérisée en ce que** la valeur absolue de la différence de distance entre la première distance (42) et la deuxième distance (43) est située dans une plage d'une valeur entre 0,2 mm à 2 mm.

5. Lame coupante selon l'une des revendications 1 à 4,
**caractérisée en ce que** le tranchant de lame (12) est formé par une arête longitudinale (18, 19) d'une surface de tranchant (38), et la surface de tranchant (38) forme avec une surface de dos de lame (48) une surface de recouvrement (23, 24) du corps de base (13), **en ce que** la surface de dos de lame (48) est séparée du corps de base (13) par l'axe longitudinal médian (14), et l'élément topographique perturbateur (30) se trouve dans une zone entre la surface de tranchant (38) et l'axe longitudinal médian (14) du corps de base (13).

6. Lame coupante selon l'une des revendications 1 à 5,
**caractérisée en ce que** l'élément perturbateur (30) s'étend le long du tranchant de lame (12) et présente une largeur (B) transversalement par rapport au tranchant de lame (12).

7. Lame coupante selon l'une des revendications 1 à 6,
**caractérisée en ce que** l'élément perturbateur (30) est une saillie qui dépasse de la surface de recouvrement (23, 24).

8. Lame coupante selon l'une des revendications 1 à 6,
**caractérisée en ce que** l'élément perturbateur (30) est un creux qui a la forme d'un enfoncement dans la surface de recouvrement (23, 24).

9. Lame coupante selon l'une des revendications 1 à 8,
**caractérisée en ce que** l'élément perturbateur (30) a la forme d'une nervure longitudinale (39) ou d'une rainure longitudinale (29).

10. Lame coupante selon la revendication 9,
**caractérisée en ce que** la nervure longitudinale (39) ou la rainure longitudinale (29) forme avec l'axe longitudinal médian (14) un angle (34) situé dans la plage de 0° à 10°, de préférence un angle (34) situé dans la plage entre 2° et 4°.

11. Lame coupante selon la revendication 9 ou 10,
**caractérisée en ce que** la rainure longitudinale (29) ou la nervure longitudinale (39) s'étend au moins sur une longueur partielle (S) du corps de base (13) de la première extrémité (16) du corps de base (13) en direction de l'extrémité de lame libre (15).

12. Lame coupante selon la revendication 9 ou 10,
**caractérisée en ce que** la rainure longitudinale (29) ou la nervure longitudinale (39) s'étend sans interruption de la première extrémité (16) du corps de base (13) jusqu'à l'extrémité de lame libre (15).

13. Lame coupante selon l'une des revendications 9 à 12,
**caractérisée en ce que** la nervure longitudinale (39) ou la rainure longitudinale (29) se termine à l'extrémité de lame libre (15).

14. Lame coupante selon l'une des revendications 5 à 13,
**caractérisée en ce que** la surface de dos de lame (48) a la forme, au moins dans une zone partielle, d'un plan plat (44).

15. Lame coupante selon l'une des revendications 1 à 14,
**caractérisée en ce que** le corps de base (13) est en matière plastique.

16. Lame coupante selon l'une des revendications 1 à 15,
**caractérisée en ce que** l'élément perturbateur (30) a pour effet une forme de section transversale de construction asymétrique du corps de base (13) entre le tranchant actif (12) et l'axe longitudinal médian (14) du corps de base (13).

17. Lame coupante selon l'une des revendications 1 à 16,
**caractérisée en ce que** dans la zone de lame active balayée (AM), les surfaces de recouvrement supérieure et inférieure (23, 24) ont des profils de hauteur (33, 33') différents, de sorte que dans une zone située entre le tranchant de lame actif (12) et l'axe longitudinal médian (14) du corps de base (13), la disposition du au moins un élément perturbateur (30) donne une section transversale asymétrique.

18. Lame coupante selon l'une des revendications 1 à 17,
**caractérisée en ce que** les longueurs (S, S') des lignes de hauteur opposées (32, 32'), mesurées entre le tranchant de lame actif (12) et l'axe longitudinal médian (14) du corps de base (13), sont différentes.
